(19) Europäisches Patentamt
European Patent Office
Office européen des brevets

(11) EP 1 120 430 B1

(12) **FASCICULE DE BREVET EUROPEEN**

(45) Date de publication et mention de la délivrance du brevet:
**13.10.2004 Bulletin 2004/42**

(51) Int Cl.[7]: **C08F 10/02**, C08F 293/00, C08F 4/00

(21) Numéro de dépôt: **01400193.7**

(22) Date de dépôt: **24.01.2001**

(54) **Procédé de polymérisation ou copolymérisation radicalaire contrôlée de l'éthylène sous haute pression en présence de radicaux libres amorceurs et de radicaux nitroxydes indoliniques contrôleurs**

Verfahren zur radikalisch kontrollierten Polymerisation oder Co-Polymerisation von Ethylene unter hohem Druck in Gegenwart von Radikalinitiatoren und Indoline Nitroxydradikalen

Method for controlled free radical polymerisation or copolymerisation of ethylene under high pressure in the presence of free radical initiators and indoline nitroxide controlling radicals

(84) Etats contractants désignés:
**AT BE CH CY DE DK ES FI FR GB GR IE IT LI LU MC NL PT SE TR**

(30) Priorité: **26.01.2000 FR 0000990**

(43) Date de publication de la demande:
**01.08.2001 Bulletin 2001/31**

(73) Titulaire: **Atofina**
**92800 Puteaux (FR)**

(72) Inventeurs:
- **Minaux, Eric**
  **88000 Epinal (FR)**
- **Greci, Lucedio**
  **43035 Felino (Parma) (IT)**
- **Buback, Michael**
  **37120 Eddigehausen (DE)**
- **Tordo, Paul**
  **13004 Marseille (FR)**
- **Senninger, Thierry**
  **57700 Hayange (FR)**
- **Stipa, Pierluigi**
  **60127 Ancona (IT)**
- **Carloni, Patricia**
  **60126 Ancona (IT)**
- **Damiani, Elisabetta**
  **61043 Gagli(pesaro-Urbino) (IT)**
- **Tommasi, Giampaolo**
  **60124 Ancona (IT)**

(74) Mandataire: **Chaillot, Geneviève**
**Cabinet CHAILLOT,**
**16-20, avenue de L'Agent Sarre,**
**B.P. 74**
**92703 Colombes Cédex (FR)**

(56) Documents cités:
**WO-A-00/20469**
**US-A- 4 581 429**
**US-A- 5 449 724**

- **BERTI, C. ET AL: "Stable nitroxide radicals from phenylisatogen and arylimino derivatives with organometallic compounds" , TETRAHEDRON (1975), 31(15), 1745-53 XP000939201 * figure 14A ***
- **BERTI, CORRADO ET AL: "Competition between single electron transfer and nucleophilic attack: reaction of 3-arylimino-2-phenyl-3H-indoles with organolithium compounds" , J. CHEM. SOC., PERKIN TRANS. 2 (1977), (8), 1032-5 XP000939337 * figure 5C * * figure 3B ***

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 120 430 B1

## Description

La présente invention porte sur un procédé de polymérisation ou copolymérisation radicalaire contrôlée de l'éthylène sous haute pression en présence à la fois :

- de radicaux libres amorceurs issus de composés amorceurs ; et
- de radicaux libres stables contrôleurs constitués par des nitroxydes indoliniques,

ces deux types de radicaux pouvant aussi être issus d'un même composé amorceur-contrôleur comme cela sera décrit ci-après.

La polymérisation sous haute pression de l'éthylène ou sa copolymérisation sous haute pression avec des comonomères copolymérisables par voie radicalaire conduit à une grande variété de produits qui trouvent de nombreuses applications, parmi lesquelles on peut citer les bases pour adhésifs, en particulier hot-melts, les liants de bitumes, les films d'emballage, les renforçants chocs, les liants de coextrusion, les objets moulés.

On connaît depuis longtemps des procédés de polymérisation de l'éthylène à des températures et pressions élevées au moyen de radicaux libres amorceurs. Les polymères de l'éthylène s'obtiennent en homopolymérisant l'éthylène ou en le copolymérisant avec au moins un autre comonomère dans un système de polymérisation fonctionnant en continu, sous des pressions de l'ordre de 50 MPa à 500 MPa et à des températures comprises entre 50 et 300°C. La polymérisation est réalisée dans des réacteurs continus tubulaires ou des autoclaves à agitateur, en présence d'amorceurs et éventuellement d'agents de transfert. Les polymères sont ensuite séparés des substances volatiles après leur sortie du réacteur dans des séparateurs.

Il est connu que la polymérisation de l'éthylène en présence ou non de comonomères peut conduire à des emballements de réaction (voir, par exemple, Chem. Eng. Proc. 1998, 37, 55-59). Ces emballements se traduisent par une élévation très marquée de la température et de la pression, donc par des éclatements des organes de sécurité de l'installation. L'emballement conduit par conséquent irrémédiablement à des arrêts non désirés de la production. On cherche donc à éviter ces arrêts le plus possible et un moyen pour ce faire est de bien contrôler les débits des réactifs entrant dans le réacteur, en particulier le débit de la source de radicaux, c'est-à-dire de l'amorceur. En effet, l'injection d'une trop forte quantité de radicaux conduit à un emballement localisé dans une des zones du réacteur, emballement se propageant ensuite très rapidement à tout le réacteur. Il existe donc une teneur en radicaux à ne pas dépasser pour ne pas provoquer l'emballement de la polymérisation.

Il est cependant connu d'une manière générale que les polymérisations radicalaires peuvent être contrôlées à l'aide de radicaux libres stables, ce contrôle permettant notamment d'obtenir des polymères présentant des distributions de masses moléculaires étroites. C'est ainsi que le brevet américain US-A-5 449 724 décrit un procédé de polymérisation radicalaire consistant à chauffer à une température d'environ 40°C à environ 500°C et sous une pression d'environ 50 MPa à 500 MPa, un mélange se composant d'un amorceur de radicaux libres, d'un radical libre stable (nitroxydes classiquement décrits, tels que le 2,2,6,6-tétraméthyl-1-pipéridinyloxy (TEMPO) et ses dérivés), et de l'éthylène, afin de former une résine thermoplastique, laquelle a une distribution des masses moléculaires d'environ 1,0 à environ 2,0.

Recherchant à perfectionner le procédé connu de (co)polymérisation radicalaire contrôlée de l'éthylène sous haute pression, la Société déposante a maintenant découvert que, si l'on engage en (co)polymérisation un amorceur radicalaire classique et, à titre d'agent contrôleur de (co)polymérisation radicalaire, un nitroxyde particulier, non décrit dans le brevet américain US-A-5 449 724, et, dans un mode de réalisation particulier, un amorceur-contrôleur susceptible de fournir au moins un radical amorceur et au moins un radical libre stable (stable dans les conditions particulières de température mises en jeu dans cette (co)polymérisation haute pression), on contrôle cette (co)polymérisation dans des conditions particulièrement favorables, tout en contrôlant aussi la stabilité réactionnelle, un avantage des nitroxydes indoliniques étant leur grande stabilité thermique, importante pour les procédés sous haute pression où les températures sont généralement élevées.

Il n'était donc pas évident de parvenir à contrôler ainsi la (co)polymérisation haute pression de l'éthylène, avec une plus grande efficacité qu'avec l'emploi d'un amorceur et d'un radical libre stable classique, et avec la constatation, également surprenante, que la (co)polymérisation de l'éthylène se déroule avec une nettement plus grande vitesse. De plus, il n'y a pas, avec le procédé de l'invention, de limitation des masses moléculaires des (co)polymères obtenus.

En outre, une autre conséquence de la présente invention est que, dans le cas où l'amorceur ou l'amorceur-contrôleur choisi est tel qu'il fournit un radical libre macroamorceur, l'on parvient à des copolymères à blocs, pour lesquels au moins l'un des blocs contient de l'éthylène comme constituant. Or, les copolymères de l'éthylène préparés sous haute pression ont actuellement des structures statistiques et il n'était pas possible jusqu'ici d'obtenir de tels copolymères à blocs ayant un bloc à base d'éthylène. Il est bien connu que l'organisation de copolymères à blocs peut conduire à des propriétés physico-chimiques nettement meilleures que les copolymères statistiques. La présente invention permet donc de parvenir à l'obtention de matériaux nouveaux ayant des propriétés nouvelles.

On peut indiquer que le brevet américain US-A-5 872 252 décrit un procédé de compression de monomères éthyléniques tels que l'éthylène sous une pression de 20 - 500 MPa en l'absence d'un amorceur de polymérisation radicalaire et en présence d'un dérivé d'amine à encombrement stérique, qui peut être un dérivé N-oxy (radical libre stable). En dehors du fait que ce procédé n'est pas un procédé de polymérisation, on peut souligner que les radicaux libres stables de la présente invention - comportant un noyau nitroxyde indolinique - ne sont pas du tout envisagés dans ce brevet US-A-5 872 252.

La présente invention a donc d'abord pour objet un procédé de polymérisation ou de copolymérisation radicalaire de l'éthylène sous haute pression en présence d'au moins un radical libre amorceur ($Z^•$) et d'au moins un radical libre stable contrôleur ($SFR^•$) qui comporte le squelette nitroxyde indolinique représenté par la formule (I) :

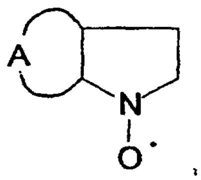

(I)

dans laquelle A est une chaîne hydrocarbonée formant un cycle aromatique avec les deux atomes de carbone auxquels elle se rattache, ce cycle pouvant porter des substituants ou pouvant porter un ou plusieurs cycles accolés, aromatiques ou aliphatiques, éventuellement substitués, les atomes de carbone formant le cycle azoté et en position alpha et bêta par rapport à l'atome d'azote, pouvant porter des atomes d'hydrogène ou des substituants.

En particulier, le ou les radicaux libres stables contrôleurs ($SFR^•$) sont choisis parmi ceux qui restent stables à au moins 90%, de préférence à au moins 95%, à 200°C au bout de 6 heures dans le diphényléther.

La présente invention fait donc intervenir la formation d'un radical libre stable. Il ne faut pas confondre un radical libre stable avec les radicaux libres dont la durée de vie est éphémère (quelques millisecondes) comme les radicaux libres issus des amorceurs habituels de polymérisation comme les peroxydes, hydroperoxydes et amorceurs de type azo. Les radicaux libres amorceurs de polymérisation tendent à accélérer la polymérisation. Au contraire, les radicaux libres stables tendent généralement à ralentir la polymérisation. On peut généralement dire qu'un radical libre est stable au sens de la présente invention s'il n'est pas amorceur de polymérisation et si, dans les conditions d'utilisation de la présente invention, la durée moyenne de vie du radical est d'au moins cinq minutes. Au cours de cette durée moyenne de vie, les molécules du radical libre stable alternent en permanence l'état de radical et l'état de groupement lié à une chaîne de polymère par une liaison covalente issue d'une réaction de couplage entre un radical centré sur un atome d'oxygène et un radical centré sur un atome de carbone. Bien entendu, il est préférable que le radical libre stable présente une bonne stabilité pendant toute la durée de son utilisation dans le cadre de la présente invention. Généralement, un radical libre stable peut être isolé à l'état de radical à la température ambiante.

Conformément à un mode de réalisation particulièrement intéressant de la présente invention, le ou les radicaux libres stables contrôleurs ($SFR^•$) sont choisis parmi ceux représentés par la formule (II) :

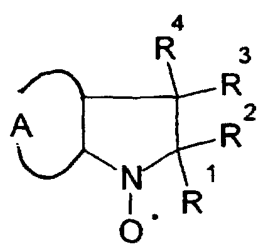

(II)

dans laquelle :

- $R^1$, $R^2$, $R^3$ et $R^4$, pouvant être identiques ou différents, représentent chacun indépendamment hydrogène ; alkyle ; alcényle ; aryle ; aralkyle ; OH ; $-OR^5$ avec $R^5$ représentant un reste alkyle, alcényle, aryle ou aralkyle ; -COOH ; $-COOR^6$ avec $R^6$ représentant un reste alkyle, alcényle, aryle ou aralkyle ; ou CN ; $R^3$ et $R^4$ pouvant se confondre en =X, X représentant O ou $=NR^7$ avec $R^7$ représentant un reste alkyle, alcényle, aryle ou aralkyle ; et les restes alkyle, alcényle, aryle ou aralkyle entrant dans la définition de $R^1$ à $R^6$ pouvant porter des substituants ; et

- A est tel que défini ci-dessus.

De façon plus particulière :

- au moins l'un des radicaux parmi $R^1$ et $R^2$ est de masse molaire supérieure à 15 ; et/ou
- $R^3$ et $R^4$ se confondent en =X, X étant tel que défini ci-dessus ; et/ou
- $R^1$ représente un reste aryle, tel que phényle ou mésityle ; et $R^2$ représente un reste alkyle en $C_1$-$C_4$, tel que méthyle, éthyle, i-propyle, n-butyle ; aryle tel que phényle ; benzyle ou allyle.

On peut citer la famille particulière de composés (II) représentée par la formule (IIa) :

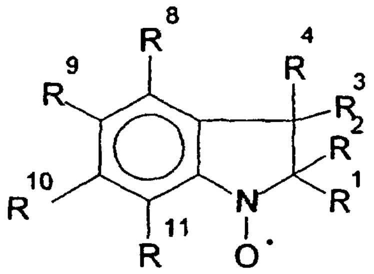

(IIa)

dans laquelle :

- $R^1$, $R^2$, $R^3$ et $R^4$ sont tels que définis ci-dessus ; et
- $R^8$ à $R^{11}$, identiques ou différents, représentent chacun indépendamment hydrogène ou un radical tel qu'indiqué ci-dessus pour $R^1$ à $R^4$ ; $R^8$ et $R^9$ ou $R^9$ et $R^{10}$ ou $R^{10}$ et $R^{11}$ pouvant être reliés entre eux pour former un cycle aliphatique ou aromatique.

Parmi cette famille particulière (IIa), on peut citer les composés dans lesquels $R^8$ à $R^{11}$ représentent hydrogène, au moins l'un d'eux pouvant par ailleurs être substitué par méthyle (par exemple cas où A est un reste de groupe mésityle). On peut citer notamment le 1,2-dihydro-2,2-diphényl-3-phénylimino-3H-indole-N-oxyl.

On peut également citer parmi cette famille particulière (IIa), les composés des formules ($IIa_1$) à ($IIa_4$) :

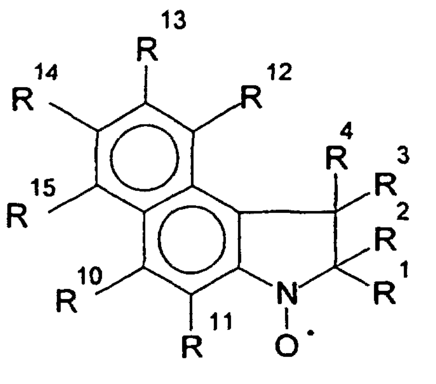

($IIa_1$)

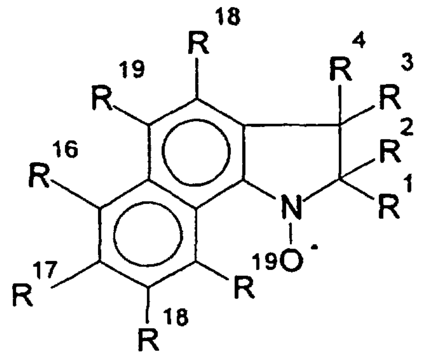

$(IIa_2)$

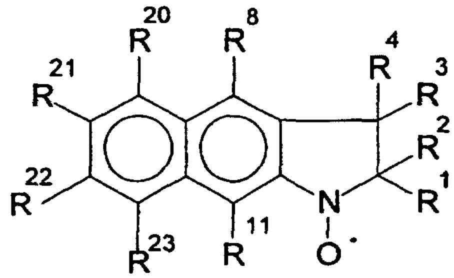

$(IIa_3)$

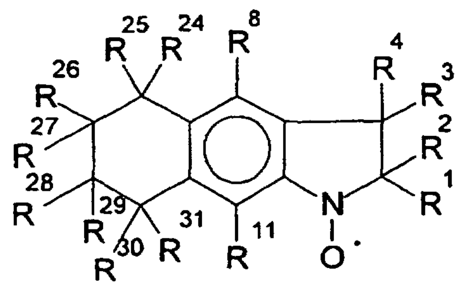

$(IIa_4)$

dans lesquelles :

- $R^1$, $R^2$, $R^3$ et $R^4$ sont tels que définis ci-dessus ; et
- $R^8$ et $R^{10}$ à $R^{31}$ représentent chacun indépendamment hydrogène ou un radical tel qu'indiqué ci-dessus pour $R^1$ à $R^4$.

La chaîne A du noyau de la formule (I) peut également faire partie d'un reste d'hydrocarbure polycyclique comme l'anthracène.

Le ou les radicaux libres amorceurs ($Z^•$) sont de façon classique issus d'un composé choisi parmi les peroxydes de diacyle, les peroxyesters, les peroxydes de dialkyle, les peroxycétals, le peroxyde de dicumyle, le peroxyde de cumyle et de tert.-butyle, les hydroperoxydes et les peroxydicarbonates.

A titre d'exemple de peroxydes de diacyle, on peut citer le peroxyde de benzoyle, le peroxyde de lauroyle, le peroxyde de décanoyle, le peroxyde de 3,5,5-triméthyl-hexanoyle, et le peroxyde d'acétyle et de cyclohexyl sulfonyle.

A titre d'exemples de peroxyesters, on peut indiquer :

- le peroxybenzoate de tert.-butyle ;
- le peroxyacétate de tert.-butyle ;
- le peroxy-3,5,5-triméthylhexanoate de tert.-butyle ;

- le peroxy-3,5,5-triméthylhexanoate de tert.-amyle ;
- le 2,5-diméthyl-2,5-di(benzoylperoxy)hexane ;
- le 00-tert.-butyl-0-isopropyl-mono-peroxy carbonate ;
- le 00-tert.-butyl-0-(2-éthylhexyl) mono-peroxy carbonate ;
- le 00-tert.-amyl-0-(2-éthylhexyl)monoperoxy carbonate ;
- le peroxyisobutyrate de tert.-butyle ;
- le peroxy-2-éthylhexanoate de tert.-butyle ;
- le peroxy-2-éthylhexanoate de tert.-amyle ;
- le 2,5-diméthyl-2,5-di(2-éthylhexanoyl peroxy)hexane ;
- le peroxypivalate de tert.-butyle ;
- le peroxypivalate de tert.-amyle ;
- le peroxynéodécanoate de tert.-butyle ;
- le peroxyisononanoate de tert.-butyle ;
- le peroxynéodécanoate de tert.-amyle ;
- le peroxynéodécanoate d'$\alpha$-cumyle ;
- le 3-hydroxy-1,1-diméthylbutyl-peroxynéodécanoate : et
- le peroxymaléate de tert.-butyle.

A titre d'exemples de peroxydes de dialkyle, on peut citer :

- le 2,5-diméthyl-2,5-di(tert.-butylperoxy)hexyne-(3) ;
- le peroxyde de di-tert.-butyle ;
- le peroxyde de di-tert.-amyle ;
- le 1,3-di(tert.-butylperoxy-isopropyl)-benzène ;
- le 2,5-diméthyl-2,5-di(tert.-butylperoxy)hexyne ;
- le 1,1,4,4,7,7-hexaméthylcyclo-4,7-diperoxynonane ;
- le 3,3,6,6,9,9-hexaméthylcyclo-1,2,4,5-tétraoxanonane.

A titre d'exemples de peroxycétals, on peut citer :

- le 1,1-di(tert.-butylperoxy)cyclohexane ;
- le 1,1-di(tert.-butylperoxy)3,3,5-triméthylcyclohexane;
- le 3,3-di(tert.-butylperoxy)butyrate d'éthyle ;
- le 3,3-di(tert.-amylperoxy)butyrate d'éthyle ;
- le 4,4-di(tert.-butylperoxy)valérate de n-butyle ;
- le 2,2-di(tert.-butylperoxy)butane ;
- le 1,1-di(tert.-amylperoxy)cyclohexane ; et
- le 2,2-bis-[4,4-di(tert.-butyl peroxy)cyclohexyl] propane.

A titre d'exemples d'hydroperoxydes, on peut citer :

- l'hydroperoxyde de tert.-butyle ;
- l'hydroperoxyde de tert.-amyle ;
- l'hydroperoxyde de cumyle ;
- le 2,5-diméthyl-2,5-di(hydroperoxy)hexane ;
- le mono hydroperoxyde de diisopropylbenzène ; et
- l'hydroperoxyde de paramenthane.

A titre d'exemples de peroxydicarbonates, on peut citer :

- le peroxydicarbonate de di-(2-éthylhexyle) ; et
- le peroxydicarbonate de dicyclohexyle.

Le rapport du composé fournissant les radicaux libres amorceurs précités (peroxydes de diacyle) ($Z^\bullet$) / monomère(s) peut être compris dans la plage de 0,0005% à 20% en poids, de préférence de 0,0005% à 10% en poids, de manière davantage préférée de 0,0005% à 5% en poids ; le rapport du composé à groupe nitroxyde indolinique contrôleurs ($SFR^\bullet$) / monomères peut être compris dans la plage de 0,0005% à 15% en poids, de préférence de 0,0005% à 5% en poids, le rapport molaire des radicaux nitroxydes indoliniques contrôleurs ($SFR^\bullet$) aux radicaux libres

amorceurs ($Z^{\bullet}$) est notamment compris entre 0,1 et 10, en particulier entre 0,5 et 5, de façon davantage préférée, entre 0,8 et 12.

Conformément à un mode de réalisation particulièrement intéressant de la présente invention, le ou les radicaux libres amorceurs sont issus d'au moins un composé amorceur-contrôleur de polymérisation susceptible de fournir, par décomposition dans les conditions de polymérisation ou copolymérisation :

- un radical libre amorceur ($Z^{\bullet}$) monofonctionnel ; et
- un radical libre stable ($SFR^{\bullet}$) tel que défini ci-dessus, qui est stable dans les conditions de (co)polymérisation.

Autrement dit, lorsque l'amorceur-contrôleur se dissocie, il produit dans le milieu un radical libre amorceur et un radical libre stable, les deux radicaux étant monofonctionnels. Des exemples d'amorceurs-contrôleurs sont indiqués ci-après.

Le (co)polymère en croissance se place donc entre la partie "amorceur" et la partie "contrôleur" que constitue le radical libre stable ($SFR^{\bullet}$).

Conformément à une première variante, on choisit, comme composé amorceur-contrôleur, un composé susceptible de fournir au moins un radical ($Z^{\bullet}$) monofonctionnel choisi parmi ceux des formules (IIIa), (IIIb) ou (IIIc) :

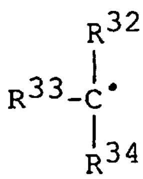 (IIIa) 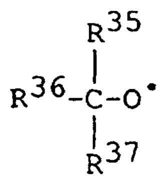 (IIIb) , 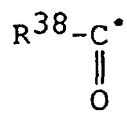 (IIIc)

dans lesquelles :

- $R^{32}$, $R^{33}$, $R^{34}$, $R^{35}$, $R^{36}$, $R^{37}$, $R^{38}$ représentent chacun indépendamment :
  - alkyle en $C_{1-24}$ éventuellement substitué ;
  - aryle en $C_{1-24}$ éventuellement substitué ;

  $R^{32}$, $R^{33}$, $R^{34}$, $R^{35}$, $R^{36}$ et $R^{37}$ pouvant également désigner chacun indépendamment un atome d'hydrogène.

A titre d'exemples de cette première variante, on choisit, comme composé amorceur-contrôleur, un composé susceptible de fournir au moins un radical ($Z^{\bullet}$) monofonctionnel choisi parmi ceux des formules ($IIIa_1$), ($IIIa_2$) ou ($IIIa_3$) :

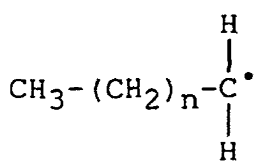 , ($IIIa_1$)

avec n = 0 ou entier de 1 à 23 (on peut citer en particulier un radical hexyle (n = 5)) ;

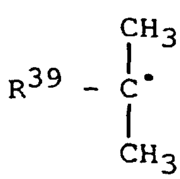 ($IIIa_2$)

avec $R^{39}$ représentant hydrogène, méthyle ou éthyle ; et

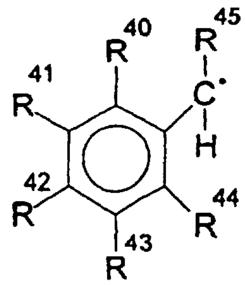

(IIIa$_3$)

,

avec :

- $R^{40}$, $R^{41}$, $R^{42}$, $R^{43}$ et $R^{44}$ représentant chacun indépendamment alkyle, aryle ou halogène ; et
- $R^{45}$ représentant alkyle ou aryle.

En particulier, on peut choisir, comme amorceur-contrôleur, un composé de la formule (II) telle que définie ci-dessus dans laquelle $O^•$ est remplacé par O-alkyle, tel qu'O-hexyle, ou par O-styryle.

On peut ainsi choisir, comme amorceur-contrôleur, le 1,2-dihydro-2,2-diphényl-3-phénylimino-3H-indole-N-oxyhexyle.

Les nitroxydes indoliniques qui constituent les radicaux ($SFR^•$) de la présente invention et les amorceurs-contrôleurs correspondants ci-dessus sont des composés connus, préparés selon des modes opératoires décrits dans la littérature. On se reportera par exemple à

- Berti, C. ; Colonna, M. ; Greci, L. ; Marcletti, L., *Tetrahedron* 1975, *31,* 1745 ;
- Carloni, P. ; Greci, L. ; Stipa, P., *J. Org. Chem.* 1991, *56*, 4733-4737 ;
- Albertini A. ; Carloni, P. ; Greci, L. ; Stipa, P. ; Neri, C., *Polym. Degrad. Stab.* 1993, *39*, 215-224 ;
- Stipa P. ; Greci, L. ; Carloni, P. ; Damiani E., *Polym. Degrad. Stab.* 1997, 55, 323-327.

Le rapport du composé amorceur-contrôleur ci-dessus/monomère(s) est généralement compris dans la plage de 0,0001% à 10% en poids, en particulier dans la plage de 0,0005% à 5% en poids.

Conformément à une seconde variante, on choisit, comme composé amorceur-contrôleur, un composé susceptible de fournir un radical ($Z^•$) de formule (IV) :

$$Z^1\text{-}(PM)^1\text{-}[(PM)^2]^• \qquad (IV)$$

dans laquelle :

- $Z^1$ représente le fragment amorceur d'un amorceur radicalaire monofonctionnel ($Z^{1•}$) tel que le radical ($Z^•$) défini ci-dessus ; et
- $(PM)^1$ représente un bloc polymère formé par polymérisation ou copolymérisation radicalaire vivante d'au moins un monomère polymérisable par voie radicalaire en présence d'un amorceur producteur de radicaux libres ($Z^{1•}$) et d'au moins un radical libre contrôleur ($SFR^•$) tel que défini ci-dessus ; et
- $(PM)^2$, dont la présence est facultative, représente un autre bloc polymère, différent de $(PM)^1$, formé par polymérisation ou copolymérisation radicalaire vivante d'au moins un monomère polymérisable par voie radicalaire en présence de l'amorceur $[Z^1\text{-}(PM)^{1•}]$ et d'au moins un radical libre contrôleur ($SFR^•$) tel que défini ci-dessus.

On peut citer comme exemples de blocs $(PM)^1$ et $(PM)^2$, ceux des formules :

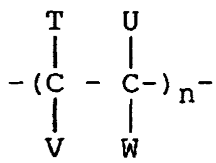

où :

- T et U représentent chacun indépendamment hydrogène ou un reste alkyle en $C_{1-10}$, substitué ou non ;
- V et W représentent chacun indépendamment hydrogène, alkyle, substitué ou non, aryle, substitué ou non, -COOH, -$COOR^{46}$, -CN, -$CONH_2$, -$CONHR^{47}$, -$CONR^{48}R^{49}$,

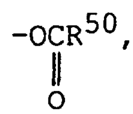

-$OR^{51}$, $R^{46}$ à $R^{51}$ représentant chacun indépendamment alkyle, substitué ou non, ou aryle, substitué ou non ; et
- n désigne le degré de polymérisation, pouvant notamment aller jusqu'à 10 000.

Cette seconde variante concerne donc l'emploi de macroamorceurs-contrôleurs, dont la partie "macroamorceur" est préparée, de façon connue, par (co)polymérisation radicalaire vivante, sous haute pression (par exemple > 100 MPa) dans le cas où de l'éthylène entre dans la préparation d'au moins l'un des blocs (T = U = V = W = H), ou sous basse pression dans le cas contraire.

La (co)polymérisation de la présente invention est par ailleurs généralement conduite sous une pression de 100 à 300 MPa, en particulier de 150 à 250 MPa, et à une température de 100 à 300°C, en particulier de 120 à 250°C.

Il n'y a pas de limitation quant aux masses moléculaires des (co)polymères obtenus selon l'invention. Suivant les conditions de polymérisation ou copolymérisation, et en particulier la durée, la température, le degré de conversion de monomère en polymère ou copolymère, il est possible de réaliser des produits de masses moléculaires différentes. En particulier, dans le cas de la polymérisation de l'éthylène, le procédé de l'invention est mené à des température, pression et durée suffisantes pour que le polyéthylène obtenu ait une masse moléculaire moyenne en poids supérieure à 70 000 et une masse moléculaire moyenne en nombre supérieure à 20 000 en équivalent polyéthylène.

Le procédé selon l'invention peut être conduit en présence d'un solvant. On choisit le solvant notamment parmi le benzène, le toluène, le xylène, l'heptane, l'acétate d'éthyle, le méthanol, l'éthanol, le propanol, l'isopropanol, le butanol, l'isobutanol, l'alcool amylique, le diméthylsulfoxyde, le glycol, le diméthylformamide, le tétrahydrofuranne et leurs mélanges, le rapport en poids solvant/ingrédients de polymérisation (à savoir monomère(s) + amorceur et contrôleur ou amorceur-contrôleur) étant avantageusement d'au plus 5.

Le procédé selon la présente invention peut également être conduit en présence d'un agent de transfert, dans les quantités usuelles. Les agents de transfert pouvant être utilisés sont bien connus de l'homme du métier spécialiste de la (co)polymérisation de l'éthylène sous haute pression. On peut citer notamment les alcanes, par exemple le butane, l'heptane, les alcènes, par exemple le propylène, et les dérivés oxygénés tels que, par exemple, les aldéhydes ou les alcools.

Conformément à la présente invention, l'éthylène peut être copolymérisé avec n'importe quel autre monomère présentant une double liaison carbone-carbone susceptible de polymériser ou copolymériser par voie radicalaire.

Le ou les monomères peuvent ainsi être choisis parmi les monomères vinyliques, allyliques, vinylidéniques, diéniques et oléfiniques (autre que l'éthylène).

Par monomères vinyliques, on entend notamment les (méth)acrylates, les monomères vinylaromatiques, les esters vinyliques, les éthers vinyliques, le (méth)acrylonitrile, le (méth)acrylamide et les mono- et di-(alkyl en $C_1$-$C_{18}$) -(méth)acrylamides, et les monoesters et diesters de l'anhydride maléique et de l'acide maléique.

- Les (méth)acrylates sont en particulier ceux des formules respectivement :

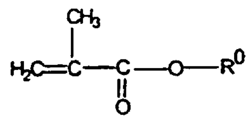

et

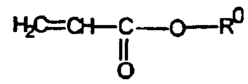

dans lesquelles $R^0$ est choisi parmi les radicaux alkyle en $C_1$-$C_{18}$, linéaires ou ramifiés, primaires, secondaires ou tertiaires, cycloalkyle en $C_5$-$C_{18}$, (alcoxy en $C_1$-$C_{18}$)-alkyle en $C_1$-$C_{18}$, (alkylthio en $C_1$-$C_{18}$)-alkyle en $C_1$-$C_{18}$, aryle et arylalkyle, ces radicaux étant éventuellement substitués par au moins un atome d'halogène et/ou au moins un groupe hydroxyle, les groupes alkyle ci-dessus étant linéaires ou ramifiés ; et les (méth)acrylates de glycidyle, de norbornyle, d'isobornyle.

Comme exemples de méthacrylates utiles, on peut citer les méthacrylates de méthyle, d'éthyle, de 2,2,2-trifluoroéthyle, de n-propyle, d'isopropyle, de n-butyle, de sec.-butyle, de tert.-butyle, de n-amyle, d'i-amyle, de n-hexyle, de 2-éthylhexyle, de cyclohexyle, d'octyle, d'i-octyle, de nonyle, de décyle, de lauryle, de stéaryle, de phényle, de benzyle, de β-hydroxy-éthyle, d'isobornyle, d'hydroxypropyle, d'hydroxybutyle. On peut citer en particulier le méthacrylate de méthyle.

Comme exemples d'acrylates de la formule ci-dessus, on peut citer les acrylates de méthyle, d'éthyle, de n-propyle, d'isopropyle, de n-butyle, de sec.-butyle, de tert.-butyle, d'hexyle, de 2-éthylhexyle, d'isooctyle, de 3,3,5-triméthylhexyle, de nonyle, d'isodécyle, de lauryle, d'octadécyle, de cyclohexyle, de phényle, de méthoxyméthyle, de méthoxyéthyle, d'éthoxyméthyle et d'éthoxyéthyle.

- Par monomère vinylaromatique au sens de la présente invention, on entend un monomère aromatique à insaturation éthylénique tel que le styrène, le vinyltoluène, l'alphaméthylstyrène, le méthyl-4-styrène, le méthyl-3-styrène, le méthoxy-4-styrène, l'hydroxyméthyl-2-styrène, l'éthyl-4-styrène, l'éthoxy-4-styrène, le diméthyl-3,4-styrène, les styrènes substitués sur le cycle par un halogène, comme le chloro-2-styrène, le chloro-3-styrène, le chloro-4-méthyl-3-styrène, le tert.-butyl-3-styrène, le dichloro-2,4-styrène et le dichloro-2,6-styrène, le vinyl-1-naphtalène et le vinylanthracène.
- Comme esters vinyliques, on peut citer l'acétate de vinyle, le propionate de vinyle, le chlorure de vinyle et le fluorure de vinyle, et comme éthers vinyliques, on peut citer le vinyl méthyl éther et le vinyl éthyl éther.

Comme monomère vinylidénique, on cite le fluorure de vinylidène.

Par monomère diénique, on entend un diène choisi parmi les diènes linéaires ou cycliques, conjugués ou non-conjugués comme par exemple le butadiène, le 2,3-diméthyl-butadiène, l'isoprène, le chloroprène, le 1,3-pentadiène, le 1,4-pentadiène, le 1,4-hexadiène, le 1,5-hexadiène, le 1,9-décadiène, le 5-méthylène-2-norbornène, le 5-vinyl-2-norbornène, les 2-alkyl-2,5-norbornadiènes, le 5-éthylène-2-norbornène, le 5-(2-propényl)-2-norbornène, le 5-(5-hexényl)-2-norbornène, le 1,5-cyclooctadiène, le bicyclo[2,2,2]octa-2,5-diène, le cyclopentadiène, le 4,7,8,9-tétrahydroindène, l'isopropylidène tétrahydroindène et le pipérylène.

Comme monomères oléfiniques, on peut citer les oléfines comportant de trois à vingt atomes de carbone et, en particulier, les alpha-oléfines de ce groupe. Comme oléfine, on peut citer le propylène, le 1-butène, le 4-méthyl-1-pentène, le 1-octène, le 1-hexène, l'isobutylène, le 3-méthyl-1-pentène, le 3-méthyl-1-butène, le 1-décène, le 1-tétradécène, ou leurs mélanges. Les monomères oléfiniques fluorés peuvent également être cités.

Comme monomère (co)polymérisable, on peut également citer les acides carboxyliques en $C_{3-8}$, à insaturation $\alpha$ ou $\beta$ éthylénique, tels que l'acide maléique, l'acide fumarique, l'acide itaconique, l'acide acrylique, l'acide méthacrylique et l'acide crotonique ; les anhydrides d'acides carboxyliques à insaturation $\alpha$ ou $\beta$ éthylénique, tels que l'anhydride maléique, l'anhydride itaconique.

Des comonomères préférés sont, entre autres, l'acétate de vinyle, l'acrylate de n-butyle, l'acrylate de 2-éthylhexyle, l'acrylate de méthyle, l'acrylate d'éthyle, le méthacrylate de glycidyle, le méthacrylate de méthyle et l'anhydride maléique.

Les proportions des comonomères pour la préparation des copolymères statistiques de l'éthylène est généralement de 0 à 90% en poids, de préférence de 0 à 50% en poids des monomères totaux.

Le procédé selon l'invention est conduit dans un réacteur tubulaire ou autoclave ou une combinaison des deux.

Les procédés autoclave et tubulaire font tous deux partie des procédés de polymérisation dits "haute pression" connus de l'homme du métier. Ces deux procédés font intervenir la polymérisation de l'éthylène par voie radicalaire sous haute pression, généralement comprise entre 100 et 350 MPa et à des températures supérieures à la température de fusion du polyéthylène en formation. Le procédé tubulaire fait intervenir la polymérisation dans un réacteur tubulaire. Un réacteur tubulaire comprend des cylindres dont le diamètre interne est généralement compris entre 1 et 10 cm et dont la longueur va généralement de 0,1 à 3 km. Dans un réacteur tubulaire, le milieu réactionnel est animé d'une grande vitesse linéaire, généralement supérieure à 2 mètres par seconde et des temps de réaction courts, pouvant

par exemple être compris entre 0,1 et 5 min.

La pression dans le réacteur tubulaire peut par exemple être comprise entre 200 et 350 MPa, de préférence entre 210 et 280 MPa, par exemple entre 230 et 250 MPa. La température dans le réacteur tubulaire peut aller de 120 à 350°C et de préférence de 150 à 300°C.

Le procédé autoclave fait intervenir la polymérisation dans un autoclave dont le rapport longueur / diamètre va généralement de 1 à 25 dans le cas d'un réacteur à zone unique. Dans le cas d'un réacteur à zones multiples, le rapport longueur de chaque zone / diamètre va généralement de 0,5 à 6, étant entendu que le milieu réactionnel s'écoule dans le sens de la longueur.

La pression dans le réacteur autoclave peut par exemple être comprise entre 100 et 250 MPa, de préférence entre 120 et 180 MPa, par exemple entre 140 à 170 MPa. La température dans le réacteur autoclave peut aller de 180 à 300°C de préférence de 240 à 290°C

La présente invention porte aussi sur un homopolymère ou un copolymère statistique de l'éthylène portant à l'une de ses extrémités le fragment Z issu d'un radical amorceur ($Z^\bullet$), et à son autre extrémité ou le long de la chaîne par suite de réaction de transfert, un fragment SFR issu d'un radical ($SFR^\bullet$) nitroxyde indolinique, tel que défini précédemment.

Il est connu que la polymérisation de l'éthylène conduit à des réactions de transfert liées à la réactivité du radical qui propage. Pour l'homopolymérisation de l'éthylène, on distingue généralement deux types de réaction de transfert :

- transfert intramoléculaire (appelé aussi "back-biting") conduisant à des branches courtes :

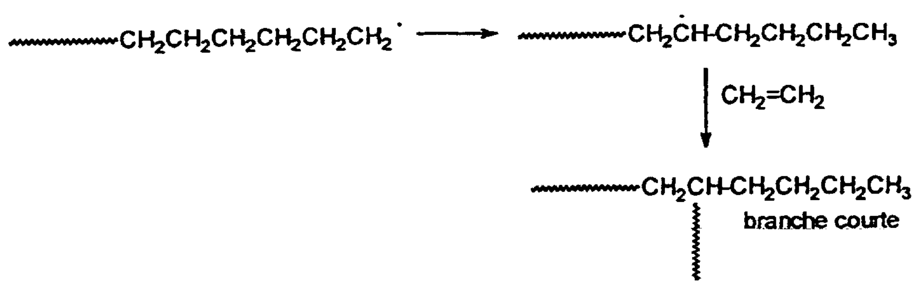


- transfert intermoléculaire conduisant à des branches longues

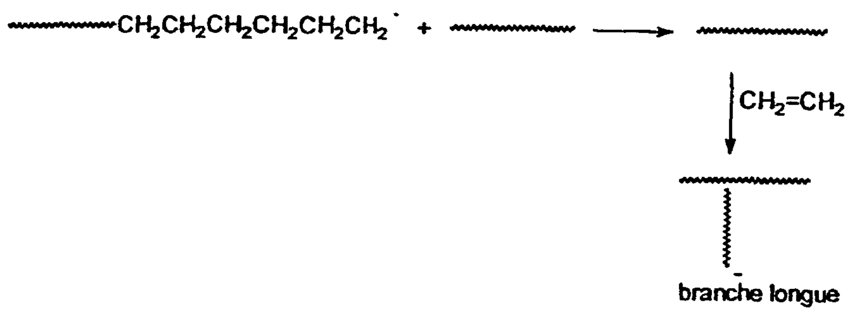


Ces réactions se rencontrent aussi pour la copolymérisation de l'éthylène avec d'autres monomères. Le contre-radical pourra donc se fixer à l'extrémité d'une branche longue.

Ainsi, l'invention porte aussi sur des copolymères à blocs pour lesquels au moins l'un des blocs comprend l'éthylène comme constituant, ledit copolymère à blocs pouvant être représenté par la formule :

$$Z\text{-}(PM)^1\text{-}(PM)^2\text{-}(PM)^3\text{-}SFR$$

dans laquelle :

- Z désigne le fragment amorceur issu d'un amorceur radicalaire ;

- $(PM)^1$, $(PM)^2$ et $(PM)^3$ représentent trois blocs polymères différents formés par polymérisation d'au moins un monomère polymérisable par voie radicalaire, $(PM)^2$ étant facultatif ;
- SFR désigne le fragment contrôleur issu du radical contrôleur ($SFR^•$) constitué par un nitroxyde indolinique tel que défini ci-dessus, ledit fragment SFR pouvant être situé soit à l'extrémité de la chaîne du copolymère soit le long de la chaîne du bloc polymère $(PM)^3$ qui le porte.

Comme déjà indiqué ci-dessus, on prépare ces copolymères à blocs en utilisant les macroamorceurs-contrôleurs décrits ci-dessus avec référence à la seconde variante.

La préparation d'un copolymère à blocs pourra être réalisée dans un seul réacteur ou dans plusieurs. Si elle se fait dans un seul réacteur, le second bloc sera obtenu après injection du (des) monomère(s) dans une zone distincte de celle ayant servi à faire le premier bloc. Elle pourra aussi se faire d'abord sous haute pression (P > 100 MPa par exemple) lorsqu'il est nécessaire d'incorporer de l'éthylène, puis le polymère issu de cette étape sous haute pression pourra être utilisé comme macroamorceur pour la préparation du copolymère. Cette deuxième opération pourra être réalisée dans tout type de réacteur fonctionnant à pression plus réduite (P < 100 MPa par exemple).

On peut citer en particulier les copolymères à blocs du type :

- Polystyrène (b) polyéthylène
- Polyacrylate (b) polyéthylène
- Polyméthacrylate (b) polyéthylène
- Poly(styrène(co)acrylate) (b) polyéthylène
- Polystyrène (b) poly(éthylène(co)acrylate)
- Polystyrène (b) poly(éthylène(co)acétate de vinyle),

de tels copolymères à blocs, de même que les homopolymères de l'éthylène et les copolymères statistiques obtenus selon l'invention, pouvant trouver de nombreuses applications en tant que base d'adhésifs, de liants de coextrusion, de films, de liants de bitumes, d'emballage, d'objets moulés.

Enfin la présente invention porte sur des compositions de polymères comprenant un mélange d'au moins un homopolymère ou copolymère statistique de l'invention et/bu d'au moins un copolymère à blocs de l'invention et/ou d'au moins un (co)polymère de l'éthylène préparé par un procédé usuel (par exemple PEBD ou PEHD), ces compositions pouvant comporter au mois un additif usuel.

Par additif, on entend tout produit servant à modifier les propriétés du polymère. Par exemple, dans la formulation des hot-melts, il est connu que les propriétés du polymère de base sont modifiées par l'ajout de résines ou d'huiles servant à apporter les propriétés de tack requises.

On donne ci-après des exemples comparatifs et des exemples décrivant la préparation de polymères tels qu'obtenus suivant le procédé de la présente invention. Dans ces exemples, on a utilisé les abréviations suivantes :

- TEMPO : 2,2,6,6-tétraméthyl-1-pipéridinyloxy

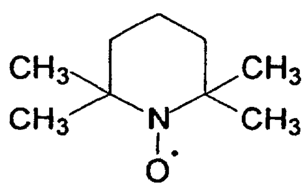

- Hexyl-TEMPO :

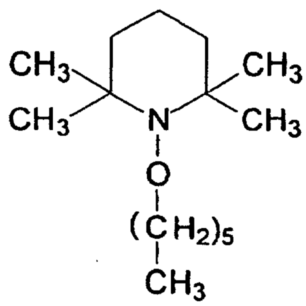

- 1,2-Dihydro-2,2-diphényl-3-phénylimino-3H-indole-N-oxyl, désigné dans ce qui suit par l'abréviation CR1 :

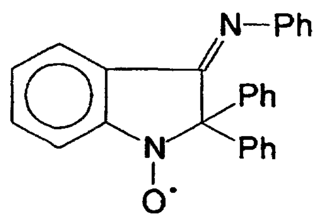

- Hexyl-CR1 :

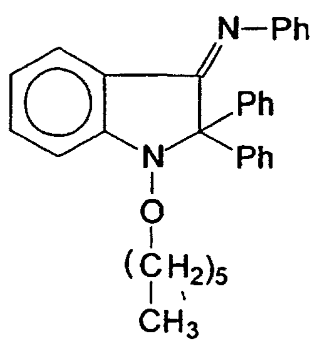

EXEMPLE 1 (Comparatif)

Polymérisation non contrôlée de l'éthylène à 200 MPa et 160°C en présence d'hexyl-TEMPO

Un réacteur métallique, en acier résistant à la haute pression, est préchauffé à l'aide de colliers chauffants à une température de 160°C. Après plusieurs purges à l'éthylène à 6 MPa, puis 100 MPa, le réacteur est chargé en éthylène (19,2 g), puis, à l'aide d'une seringue, on injecte dans le réacteur :

- 0,01626 g d'hexyl-TEMPO (soit 103 ppm molaires de radicaux libres par rapport à l'éthylène) ; et
- 0,804 g d'heptane.

La pression est ensuite augmentée vers 100 MPa à l'aide d'une pompe mécanique, puis à la valeur désirée de 200 MPa à l'aide d'une pompe manuelle. La conversion est mesurée en continu à l'aide d'un spectromètre infrarouge relié au réacteur.
Au bout de 3 heures, l'éthylène n'a pas polymérisé.
Ceci est en accord avec les mesures de spectrométrie paramagnétique électronique qui montrent qu'il est nécessaire de chauffer l'hexyl-TEMPO au-delà de 200°C pour voir apparaître le signal du TEMPO. Or la liaison entre

la chaîne de polyéthylène et le TEMPO est de même nature. Il est donc nécessaire de chauffer au-delà de 200°C pour pouvoir polymériser l'éthylène.

EXEMPLE 2 (Invention)

Polymérisation de l'éthylène à 200 MPa et à 160°C avec l'amorceur-contrôleur hexyl-CR1

On reprend les conditions opératoires de l'Exemple 1, excepté que l'on utilise 19,09 g d'éthylène et qu'on remplace les 0,01626 g d'hexyl-TEMPO par 0,03147 g d'hexyl-CR1 (soit 101 ppm molaires de radicaux libres par rapport à l'éthylène).
On a apprécié le contrôle de la polymérisation à l'aide de la courbe ln(1/(1 - conversion)) en fonction du temps, sachant que le contrôle est d'autant meilleur que la courbe se rapproche de la linéarité.
On a obtenu les résultats suivants au cours du temps :

| Temps (min.) | Conversion (%) | ln(l/(1 - conversion)) |
|---|---|---|
| 0 | 0 | 0 |
| 10 | 7 | 0,072 |
| 15 | 9,5 | 0,099 |
| 20 | 11,7 | 0,124 |

Le tracé de la courbe semi-logarithmique ln(l/(1 - conversion)) en fonction du temps est une droite, ce qui indique un bon contrôle de la polymérisation. Le coefficient de corrélation de cette droite est de 0,99. De plus, la comparaison des Exemples 1 et 2 montre que l'hexyl-CR1 procure une vitesse de polymérisation de 0,6%/minute, alors qu'il n'y a pas de polymérisation (vitesse nulle) avec l'hexyl-TEMPO.

EXEMPLE 3 (Invention)

On refait plusieurs fois l'expérience de l'Exemple 2 mais à des temps différents de façon à pouvoir isoler du polyéthylène à différents taux de conversion.
Les masses moléculaires des polyéthylène ont été déterminées à l'aide de la chromatographie d'exclusion stérique, après dissolution du polyéthylène dans le trichlorobenzène à 145°C. Les masses sont exprimées en équivalent polyéthylène. La masse moléculaire au pic est celle déterminée au moment du pic chromatographique.

| Conversion (%) | Masse moléculaire au pic (g/mol) | Polymolécularité $\overline{M}_w/\overline{M}_n$ |
|---|---|---|
| 0 | 0 | - |
| 7,2 | 75000 | 3,67 |
| 14,8 | 95000 | 5,53 |
| 18,3 | 150000 | 6,25 |
| 37,8 | 250000 | 7,39 |

On peut constater que la masse moléculaire croît linéairement avec le taux de conversion, signe d'une polymérisation vivante. De plus, les masses observées sont élevées, ce qui est intéressant pour les propriétés mécaniques du matériau.
On constate que l'indice de polymolécularité croît avec la conversion, ce qui n'est pas signe nécessairement d'une perte du contrôle de la polymérisation. En effet, l'indice croît par suite des réactions de transfert intermoléculaires qui subsistent même en présence de contre-radicaux. Alors que le brevet US-A-5 449 724 décrit des (co)polymères de l'éthylène d'indices de polymolécularité compris entre 1,0 et 2,0, la présente invention permet d'obtenir des polymères d'indices plus élevés, ce qui peut être bénéfique pour certaines applications (fabrication de films par exemple) ou pour avoir des caractéristiques rhéologiques particulières.
Il n'était pas du tout évident qu'un composé tel que l'hexyl-CR1 puisse polymériser l'éthylène avec une telle vitesse et avec un aussi bon contrôle.

EXEMPLE 4

Comparaison de la stabilité thermique du nitroxyde TEMPO et du nitroxyde CR1

Les essais de stabilité thermique ont été réalisés à l'aide d'un spectromètre de marque BRUKER modèle EMX, équipé d'une unité de température variable B-VT-2000 de marque BRUKER. Les tests ont été conduits dans le diphényl éther avec une concentration en nitroxyde de 5 x $10^{-4}$ M. Le diphényl éther a été passé au préalable sur alumine 90 neutre activée et les échantillons ont été désoxygénés par plusieurs cycles de congélation-vide-décongélation. La quantité de solution utilisée est d'environ 500 microlitres par essai. L'échantillon est ensuite placé dans la cavité du spectromètre, puis chauffé à 200°C pendant 6 heures. Les spectres sont enregistrés toutes les 5 minutes et l'évolution de la concentration en nitroxyde est déterminée par double intégration des spectres de RPE. L'intégrale de référence est celle correspondant au premier spectre du nitroxyde à 200°C.

Les résultats sont rapportés dans le Tableau suivant :

| Temps (h) | Quantité de nitroxyde restant (exprimée en %) | |
|---|---|---|
| | TEMPO | CR1 |
| 0 | 100 | 100 |
| 2 | 82 | 97 |
| 4 | 71 | 95 |
| 6 | 60 | 95 |

Au bout de 6 heures, il ne reste que 60% du TEMPO, alors qu'il reste encore 95% du contre-radical indolinique CR1. On peut aussi comparer les vitesses de décomposition des deux espèces :

TEMPO : 6,6% heure
CR1 : 0,83% heure.

Le CR1 est un contre-radical plus stable thermiquement.

**Revendications**

1. Procédé de polymérisation ou de copolymérisation radicalaire de l'éthylène sous haute pression en présence d'au moins un radical libre amorceur ($Z^\bullet$) et d'au moins un radical libre stable contrôleur ($SFR^\bullet$) qui comporte le squelette nitroxyde indolinique représenté par la formule (I) :

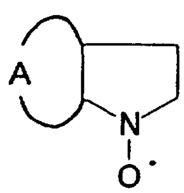

(I)

dans laquelle A est une chaîne hydrocarbonée formant un cycle aromatique avec les deux atomes de carbone auxquels elle se rattache, ce cycle pouvant porter des substituants ou pouvant porter un ou plusieurs cycles accolés, aromatiques ou aliphatiques, éventuellement substitués, les atomes de carbone formant le cycle azoté et en position alpha et bêta par rapport à l'atome d'azote, pouvant porter des atomes d'hydrogène ou des substituants.

2. Procédé selon la revendication 1, **caractérisé par le fait que** le ou les radicaux libres stables contrôleurs ($SFR^\bullet$) sont choisis parmi ceux qui restent stables à au moins 90% à 200°C au bout de 6 heures dans le diphényléther.

3. Procédé selon la revendication 2, **caractérisé par le fait que** le ou les radicaux libres stables contrôleurs ($SFR^\bullet$) sont choisis parmi ceux qui restent stables à au moins 95% à 200°C au bout de 6 heures dans le diphényléther.

**4.** Procédé selon l'une des revendications 1 à 3, **caractérisé par le fait que** le ou les radicaux libres stables contrôleurs (SFR•) sont choisis parmi ceux représentés par la formule (II) :

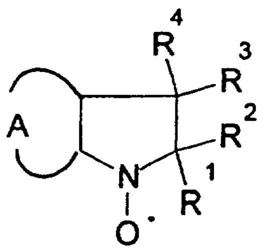

(II)

dans laquelle :

- $R^1$, $R^2$, $R^3$ et $R^4$, pouvant être identiques ou différents, représentent chacun indépendamment hydrogène ; alkyle ; alcényle ; aryle ; aralkyle ; OH ; $-OR^5$ avec $R^5$ représentant un reste alkyle, alcényle, aryle ou aralkyle ; -COOH ; $-COOR^6$ avec $R^6$ représentant un reste alkyle, alcényle, aryle ou aralkyle ; ou CN ; $R^3$ et $R^4$ pouvant se confondre en =X, X représentant O ou $=NR^7$ avec $R^7$ représentant un reste alkyle, alcényle, aryle ou aralkyle ; et les restes alkyle, alcényle, aryle ou aralkyle entrant dans la définition de $R^1$ à $R^6$ pouvant porter des substituants ; et
- A est tel que défini à la revendication 1.

**5.** Procédé selon la revendication 4, **caractérisé par le fait qu'**au moins l'un des radicaux parmi $R^1$ et $R^2$ est de masse molaire supérieure à 15.

**6.** Procédé selon la revendication 4 et 5, **caractérisé par le fait que** $R^3$ et $R^4$ se confondent en =X, X étant tel que défini à la revendication 4.

**7.** Procédé selon l'une des revendications 4 à 6, **caractérisé par le fait que** :

- $R^1$ représente un reste aryle ; et
- $R^2$ représente un reste alkyle en $C_1$-$C_4$ ; aryle ; benzyle ; ou allyle.

**8.** Procédé selon l'une des revendications 4 à 7, **caractérisé par le fait que** l'on choisit, comme composés de formule (II), ceux représentés par la formule (IIa) :

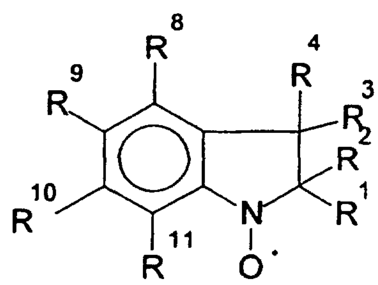

(IIa)

dans laquelle :

- $R^1$, $R^2$, $R^3$ et $R^4$ sont tels que définis à la revendication 4 ; et
- $R^8$ à $R^{11}$, identiques ou différents, représentent chacun indépendamment hydrogène ou un radical tel qu'indiqué pour $R^1$ à $R^4$ à la revendication 4 ; $R^8$ et $R^9$ ou $R^9$ et $R^{10}$ ou $R^{10}$ et $R^{11}$ pouvant être reliés entre eux pour former un cycle aliphatique ou aromatique.

**9.** Procédé selon la revendication 8, **caractérisé par le fait que** $R^8$ à $R^{11}$ représentent chacun un hydrogène, au moins l'un deux pouvant par ailleurs être substitué par méthyle.

**10.** Procédé selon la revendication 9, **caractérisé par le fait que** le radical libre stable contrôleur (SFR•) est le 1,2-dihydro-2,2-diphényl-3-phénylimino-3H-indole-N-oxyl.

**11.** Procédé selon la revendication 8, **caractérisé par le fait que** les radicaux libres stables contrôleurs (SFR•) de formule (IIa) dans lesquels $R^8$ et $R^9$ ou $R^9$ et $R^{10}$ ou $R^{10}$ et $R^{11}$ sont reliés entre eux pour former un cycle aliphatique ou aromatique sont choisis parmi ceux des formules ($IIa_1$) à ($IIa_4$) :

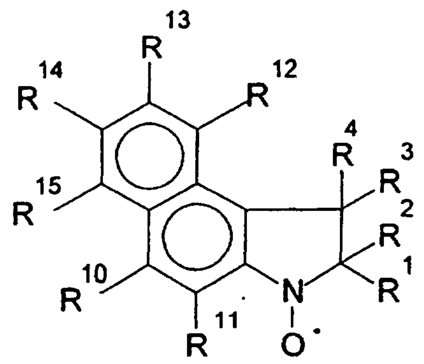

($IIa_1$)

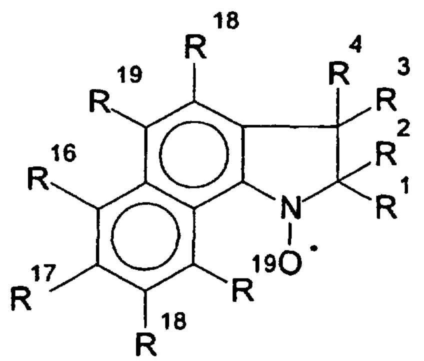

($IIa_2$)

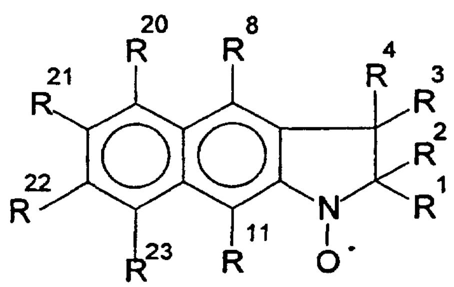

($IIa_3$)

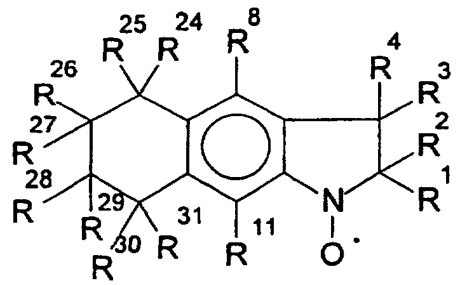

$(IIa_4)$

dans lesquelles :

- $R^1$, $R^2$, $R^3$ et $R^4$ sont tels que définis à la revendication 4 ; et
- $R^8$ et $R^{10}$ à $R^{31}$ représentent chacun indépendamment hydrogène ou un radical tel qu'indiqué pour $R^1$ à $R^4$ à la revendication 4.

**12.** Procédé selon l'une des revendications 1 à 11, **caractérisé par le fait que** le ou les radicaux libres amorceurs ($Z^•$) sont issus d'un composé choisi parmi les peroxydes de diacyle, les peroxyesters, les peroxydes de dialkyle, le peroxyde de dicumyle, le peroxyde de cumyle et de tert.-butyle, les peroxycétals, les hydroperoxydes et les peroxydicarbonates.

**13.** Procédé selon la revendication 12, **caractérisé par le fait que** le rapport du ou des composés fournissant les radicaux libres amorceurs ($Z^•$) / monomère(s) est compris dans la plage de 0,0005 % à 20 % en poids, de préférence de 0,0005% à 10% en poids, et de manière préférée, de 0,0005% à 5 % en poids.

**14.** Procédé selon l'une des revendications 1 à 13, **caractérisé par le fait que** le rapport du ou des radicaux libres stables contrôleurs ($SFR^•$) / monomère(s) est compris dans la plage de 0,0005% à 15% en poids, de manière préférée de 0,0005% à 5% en poids.

**15.** Procédé selon l'une des revendications 1 à 14, **caractérisé par le fait que** le rapport molaire du ou des radicaux libres stables contrôleurs ($SFR^•$) de formule (I) /composé(s) fournissant les radicaux libres amorceurs est compris dans la plage de 0,1 à 5, de manière préférée de 0,8 à 1,2.

**16.** Procédé selon l'une des revendications 1 à 11, **caractérisé par le fait que** le ou les radicaux libres amorceurs sont issus d'au moins un composé amorceur-contrôleur de polymérisation susceptible de fournir, par décomposition dans les conditions de polymérisation ou copolymérisation :

- un radical libre amorceur ($Z^•$ ) monofonctionnel ; et
- un radical libre stable ($SFR^•$) tel que défini à l'une des revendications 1 à 10, qui est stable dans les conditions de (co)polymérisation.

**17.** Procédé selon la revendication 16, **caractérisé par le fait que** l'on choisit, comme composé amorceur-contrôleur, un composé susceptible de fournir un radical ($Z^•$) monofonctionnel choisi parmi ceux des formules (IIIa), (IIIb) ou (IIIc) :

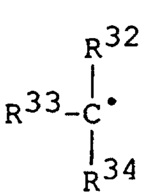 (IIIa) 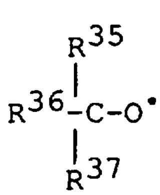 (IIIb) 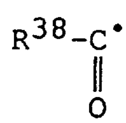 (IIIc)

dans lesquelles :

- $R^{32}$, $R^{33}$, $R^{34}$, $R^{35}$, $R^{36}$, $R^{37}$, $R^{38}$ représentent chacun indépendamment :

  - alkyle en $C_{1-24}$ éventuellement substitué ;
  - aryle en $C_{1-24}$ éventuellement substitué ;

  $R^{32}$, $R^{33}$, $R^{34}$, $R^{35}$, $R^{36}$ et $R^{37}$ pouvant également désigner chacun indépendamment un atome d'hydrogène.

**18.** Procédé selon la revendication 17, **caractérisé par le fait que** l'on choisit, comme composé amorceur-contrôleur, un composé susceptible de fournir au moins un radical ($Z^{\bullet}$) monofonctionnel choisi parmi ceux des formules ($IIIa_1$), ($IIIa_2$) ou ($IIIa_3$) :

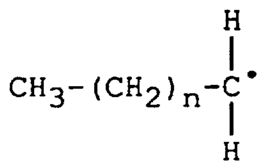

($IIIa_1$)

avec n = 0 ou entier de 1 à 23 ;

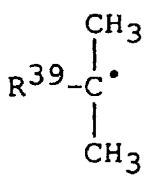

($IIIa_2$)

avec $R^{39}$ représentant hydrogène, méthyle ou éthyle ; et

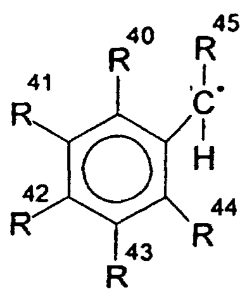

($IIIa_3$)

avec :

- $R^{40}$, $R^{41}$, $R^{42}$, $R^{43}$ et $R^{44}$ représentant chacun indépendamment alkyle, aryle ou halogène ; et
- $R^{45}$ représentant alkyle ou aryle.

**19.** Procédé selon l'une des revendications 16 à 18, **caractérisé par le fait que** l'on choisit, comme amorceur-contrôleur, un composé de la formule (II) telle que définie à l'une des revendications 4 à 10 dans laquelle $-O^{\bullet}$ est remplacé par -O-alkyle ou -O-styryle.

**20.** Procédé selon la revendication 19, **caractérisé par le fait que** l'on choisit, comme amorceur-contrôleur, le 1,2-dihydro-2,2-diphényl-3-phénylimino-3H-indole-N-oxyhexyle.

**21.** Procédé selon l'une des revendications 16 à 19, **caractérisé par le fait que** le rapport du composé amorceur-contrôleur/monomère(s) est compris dans la plage de 0,0001% à 10% en poids.

**22.** Procédé selon la revendication 21, **caractérisé par le fait que** le rapport du composé amorceur-contrôleur/monomère(s) est compris dans la plage de 0,0005% à 5% en poids.

**23.** Procédé selon la revendication 16, **caractérisé par le fait que** l'on choisit, comme composé amorceur-contrôleur, un composé susceptible de fournir un radical ($Z^{\bullet}$) de formule (IV) :

$$Z^1\text{-}(PM)^1\text{-}[(PM)^2]^{\bullet} \qquad (IV)$$

dans laquelle :

- $Z^1$ représente le fragment amorceur d'un amorceur radicalaire monofonctionnel ($Z^{1\bullet}$) tel que le radical ($Z^{\bullet}$) défini à l'une des revendications 17 et 18 ; et
- $(PM)^1$ représente un bloc polymère formé par polymérisation ou copolymérisation radicalaire vivante d'au moins un monomère polymérisable par voie radicalaire en présence d'un amorceur producteur de radicaux libres ($Z^{1\bullet}$) et d'au moins un radical libre contrôleur ($SFR^{\bullet}$) tel que défini à l'une des revendications 1 à 11 ; et
- $(PM)^2$, dont la présence est facultative, représente un autre bloc polymère, différent de $(PM)^1$, formé par polymérisation ou copolymérisation radicalaire vivante d'au moins un monomère polymérisable par voie radicalaire en présence de l'amorceur $[Z^1\text{-}(PM)^{1\bullet}]$ et d'au moins un radical libre contrôleur ($SFR^{\bullet}$) tel que défini à l'une des revendications 1 à 11.

**24.** Procédé selon la revendication 23, **caractérisé par le fait que** les blocs $(PM)^1$ et $(PM)^2$ ont la formule :

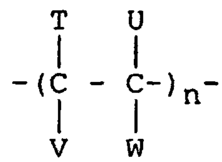

où :

- T et U représentent chacun indépendamment hydrogène ou un reste alkyle en $C_{1-10}$, substitué ou non ;
- V et W représentent chacun indépendamment hydrogène, alkyle, substitué ou non, aryle, substitué ou non, -COOH, $-COOR^{46}$, -CN, $-CONH_2$, $-CONHR^{47}$, $-CONR^{48}R^{49}$,

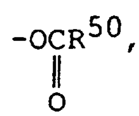

  $-OR^{51}$, $R^{46}$ à $R^{51}$ représentant chacun indépendamment alkyle, substitué ou non, ou aryle, substitué ou non ; et
- n désigne le degré de polymérisation, pouvant notamment aller jusqu'à 10 000.

**25.** Procédé selon l'une des revendications 1 à 24, **caractérisé par le fait qu'**il est conduit sous une pression de 100 à 300 MPa.

**26.** Procédé selon la revendication 25, **caractérisé par le fait qu'**il est conduit sous une pression de 150 à 250 MPa.

**27.** Procédé selon l'une des revendications 1 à 26, **caractérisé par le fait qu'**il est conduit à une température de 100 à 300°C.

**28.** Procédé selon la revendication 27, **caractérisé par le fait qu'**il est conduit à une température de 120 à 250°C.

**29.** Procédé selon l'une des revendications 1 à 27, pour la polymérisation de l'éthylène, **caractérisé par le fait qu'**il est mené à des température, pression et durée suffisantes pour que le polyéthylène obtenu ait une masse moléculaire moyenne en poids supérieure à 70 000 en équivalent polyéthylène et une masse moléculaire moyenne en nombre supérieure à 20 000 en équivalent polyéthylène.

**30.** Procédé selon l'une des revendications 1 à 29, **caractérisé par le fait qu'**il est conduit en présence d'un solvant.

**31.** Procédé selon la revendication 30, **caractérisé par le fait que** l'on choisit le solvant parmi le benzène, le toluène, le xylène, l'heptane, l'acétate d'éthyle, le méthanol, l'éthanol, le propanol, l'isopropanol, le butanol, l'isobutanol, l'alcool amylique, le diméthylsulfoxyde, le glycol, le diméthylformamide, le tétrahydrofuranne et leurs mélanges.

**32.** Procédé selon l'une des revendications 30 et 31, **caractérisé par le fait que** le rapport en poids solvant/ingrédients de polymérisation est d'au plus 5.

**33.** Procédé selon l'une des revendications 1 à 32, **caractérisé par le fait qu'**il est conduit en présence d'un agent de transfert.

**34.** Procédé selon l'une des revendications 1 à 33, **caractérisé par le fait qu'**il consiste en une copolymérisation de l'éthylène avec au moins un comonomère choisi parmi les monomères vinyliques, allyliques, vinylidéniques, diéniques et oléfiniques.

**35.** Procédé selon l'une des revendications 1 à 34, **caractérisé par le fait qu'**il est conduit dans un réacteur tubulaire ou autoclave ou une combinaison des deux.

**36.** Homopolymère ou copolymère statistique de l'éthylène portant à l'une de ses extrémités le fragment Z issu d'un radical amorceur ($Z^\bullet$), et à son autre extrémité, ou le long de la chaîne par suite de réaction de transfert, un fragment SFR issu d'un radical ($SFR^\bullet$), tel que défini à l'une des revendications 1 à 11.

**37.** Copolymère à blocs pour lesquels au moins l'un des blocs comprend l'éthylène comme constituant, ledit copolymère à blocs pouvant être représenté par la formule :

$$Z\text{-}(PM)^1\text{-}(PM)^2\text{-}(PM)^3\text{-}SFR$$

dans laquelle :

- Z désigne le fragment amorceur issu d'un amorceur radicalaire ;
- $(PM)^1$, $(PM)^2$ et $(PM)^3$ représentent trois blocs polymères différents formés par polymérisation d'au moins un monomère polymérisable par voie radicalaire, $(PM)^2$ étant facultatif ;
- SFR désigne le fragment contrôleur issu du radical contrôleur ($SFR^\bullet$), tel que défini à l'une des revendications 1 à 11, ledit fragment SFR pouvant être situé soit à l'extrémité de la chaîne du copolymère soit le long de la chaîne du bloc polymère $(PM)^3$ qui le porte.

**38.** Compositions de polymères comprenant un mélange d'au moins un homopolymère ou copolymère statistique de l'éthylène tel que défini à la revendication 36 et/ou d'au moins un copolymère à blocs tel que défini à la revendication 37 et/ou d'au moins un (co)polymère de l'éthylène préparé par un procédé usuel, ces compositions pouvant comporter au mois un additif usuel.

**Patentansprüche**

**1.** Verfahren zur radikalischen Polymerisation oder Copolymerisation von Ethylen unter hohem Druck in Gegenwart von wenigstens einem freien Initiatorradikal ($Z^\cdot$) und wenigstens einem freien, stabilen Reglerradikal ($SFR^\cdot$), das das durch die Formel (I) wiedergegebene Indolinnitroxidgerüst umfaßt:

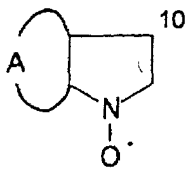

(I)

worin A eine Kohlenwasserstoffkette ist, die mit den zwei Kohlenstoffatomen, an welche sie gebunden ist, einen aromatischen Zyklus bildet, wobei der Zyklus Substituenten tragen kann oder einen oder mehrere an diesen gebundene aromatische oder aliphatische Zyklen, die eventuell substituiert sind, und die den stickstoffhaltigen Zyklus bildenden Kohlenstoffatome in Alpha- und Betaposition in Bezug auf das Stickstoffatom Wasserstoffatome oder Substituenten tragen können.

2. Verfahren gemäß Anspruch 1, **dadurch gekennzeichnet, daß** das oder die freien, stabilen Reglerradikale (SFR˙) aus denen ausgewählt sind, die bei 200°C bis zu 6 Stunden in Diphenylether zu wenigstens 90% stabil bleiben.

3. Verfahren gemäß Anspruch 2, **dadurch gekennzeichnet, daß** das oder die freien, stabilen Reglerradikale (SFR˙) aus denen ausgewählt sind, die bei 200°C bis zu 6 Stunden in Diphenylether zu wenigstens 95% stabil bleiben.

4. Verfahren gemäß einem der Ansprüche 1 bis 3, **dadurch gekennzeichnet, daß** das oder die freien, stabilen Reglerradikale (SFR˙) aus denen ausgewählt sind, die durch die Formel (II) wiedergegeben sind:

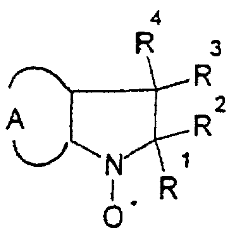

(II)

worin:

$R^1$, $R^2$, $R^3$ und $R^4$ identisch oder verschieden sein können und jeweils unabhängig Wasserstoff darstellt; Alkyl; Alkenyl; Aryl; Aralkyl; OH; $-OR^5$, wobei $R^5$ einen Alkylrest, Alkenylrest, Arylrest oder Aralkylrest darstellt; -COOH; $-COOR^6$, wobei $R^6$ einen Alkylrest, Alkenylrest, Arylrest oder Aralkylrest darstellt; oder CN; $R^3$ und $R^4$ = X sein können, wobei X, O oder $=NR^7$ darstellt, wobei $R^7$ einen Alkylrest, Alkenylrest, Arylrest oder Aralkylrest darstellt; und Alkylreste, Alkenylreste, Arylreste oder Aralkylreste nach Definition von $R^1$ bis $R^6$, wobei diese Substituenten tragen können; und
A wie in Anspruch 1 definiert ist.

5. Verfahren gemäß Anspruch 4, **dadurch gekennzeichnet, daß** wenigstens eines der Radikale von $R^1$ und $R^2$ eine Molmasse größer als 15 besitzt.

6. Verfahren gemäß Anspruch 4 und 5, **dadurch gekennzeichnet, daß** $R^3$ und $R^4$=X sein können, wobei X wie in Anspruch 4 definiert ist.

7. Verfahren gemäß einem der Ansprüche 4 bis 6, **dadurch gekennzeichnet, daß**:

$R^1$ einen Alkylrest darstellt; und
$R^2$ einen $C_1$ - $C_4$ Alkylrest darstellt; Aryl; Benzyl; oder Allyl.

**8.** Verfahren gemäß einem der Ansprüche 4 bis 7, **dadurch gekennzeichnet, daß** man als Verbindungen der Formeln (II) aus denen durch die Formel (IIa) wiedergegebenen auswählt:

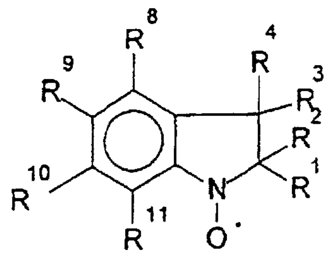

(IIa)

worin:

- $R^1$, $R^2$, $R^3$ und $R^4$ wie in Anspruch 4 definiert sind;
- $R^8$ bis $R^{11}$, identisch oder verschieden, jeweils unabhängig Wasserstoff wiedergeben, oder ein Radikal, wie es für $R^1$ bis $R^4$ in Anspruch 4 angegeben ist; $R^8$ und $R^9$ oder $R^9$ und $R^{10}$ oder $R^{10}$ und $R^{11}$ zur Bildung eines aliphatischen oder aromatischen Zyklus miteinander verbunden sein können.

**9.** Verfahren gemäß Anspruch 8, **dadurch gekennzeichnet, daß** $R^8$ bis $R^{11}$ jeweils ein Wasserstoffatom darstellen, wobei wenigstens einer von diesen anderweitig durch Methyl substituiert sein kann.

**10.** Verfahren gemäß Anspruch 9, **dadurch gekennzeichnet, daß** das freie, stabile Reglerradikal (SFR·) 1,2-Dihydro-2,2-diphenyl-3-phenylamino-3H-indol-N-oxid ist.

**11.** Verfahren gemäß Anspruch 8, **dadurch gekennzeichnet, daß** die freien, stabilen Reglerradikale (SFR·) der Formel (IIa), in denen $R^8$ und $R^9$ oder $R^9$ und $R^{10}$ oder $R^{10}$ und $R^{11}$ zur Bildung eines aliphatischen oder aromatischen Zyklus miteinander verbunden sind, aus denen der Formeln ($IIa_1$) bis ($IIa_4$) ausgewählt sind:

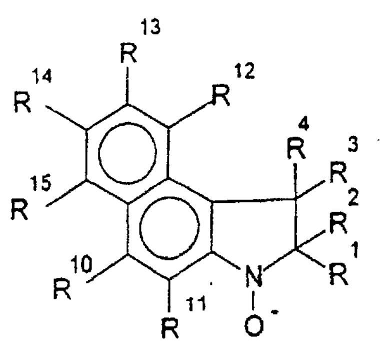

($IIa_1$)

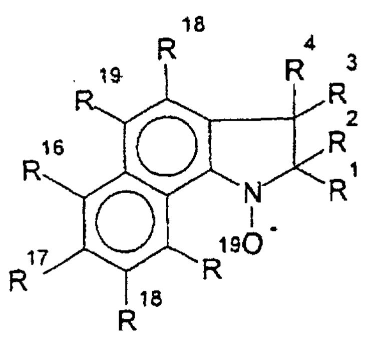

($IIa_2$)

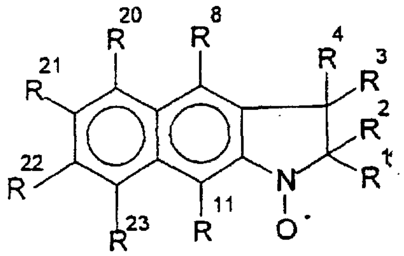

(IIa₃)

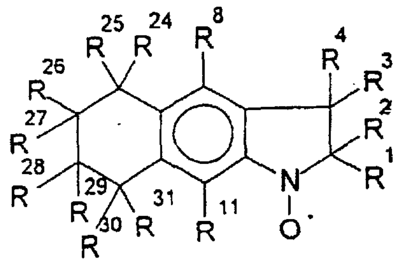

(IIa₄)

worin:

- $R^1$, $R^2$, $R^3$ und $R^4$ wie in Anspruch 4 definiert sind; und
- $R^8$ und $R^{10}$ bis $R^{31}$ jeweils unabhängig Wasserstoff oder ein Radikal bedeuten, wie es für $R^1$ bis $R^4$ in Anspruch 4 angegeben ist.

**12.** Verfahren gemäß einem der Ansprüche 1 bis 11, **dadurch gekennzeichnet, daß** das oder die freien Initiatorradikale (Z) aus einer Verbindung stammen, die ausgewählt ist aus Diacylperoxiden, Peroxyestern, Dialkylperoxiden, Dicumylperoxid, Cumylperoxid und Tertiärbutylperoxid, Peroxyacetalen, Hydroperoxiden und Peroxydicarbonaten.

**13.** Verfahren gemäß Anspruch 12, **dadurch gekennzeichnet, daß** das Verhältnis von der oder den Verbindungen, die die freien Initiatorradikale ($Z^·$) hervorbringen/Monomer(e) in dem Gewichtsbereich von 0,0005 Gew.-% bis 20 Gew.-% enthalten ist, bevorzugt von 0,0005 Gew.-% bis 10 Gew.-%, und stärker bevorzugt von 0,0005 Gew.-% bis 5 Gew.-%.

**14.** Verfahren gemäß einem der Ansprüche 1 bis 13, **dadurch gekennzeichnet, daß** das Verhältnis des oder der freien, stabilen Reglerradikale ($SFR^·$)/Monomer(e) in dem Gewichtsbereich von 0,0005 Gew.-% bis 15 Gew.-% enthalten ist, bevorzugt von 0,0005 Gew.-% bis 5 Gew.-%.

**15.** Verfahren gemäß einem der Ansprüche 1 bis 14, **dadurch gekennzeichnet, daß** das Molverhältnis des oder der freien, stabilen Reglerradikale ($SFR^·$) der Formel I/Verbindung(en), welche die freien Initiatorradikale liefern, in dem Bereich von 0,1 bis 5 enthalten ist, bevorzugt von 0,8 bis 1,2.

**16.** Verfahren gemäß einem der Ansprüche 1 bis 11, **dadurch gekennzeichnet, daß** das oder die freien Initiatorradikale aus einer Polymerisationsinitiator-Reglerverbindung stammen, die durch Zersetzung unter Polymerisations- oder Copolymerisationsbedingungen liefern kann:

- ein monofunktionelles, freies Initiatorradikal ($Z^·$); und
- ein freies, stabiles Radikal ($SFR^·$) wie in einem der Ansprüche 1 bis 10 definiert, das unter den Bedingungen der (Co-)Polymerisation stabil ist.

**17.** Verfahren nach Anspruch 16, **dadurch gekennzeichnet, daß** man als Initiator-Reglerverbindung eine Verbindung

auswählt, die ein monofunktionelles Radikal ($Z^{\cdot}$) liefern kann, das aus denen der Formeln (IIIa), (IIIb) oder (IIIc) ausgewählt ist:

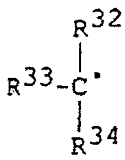 (IIIa) 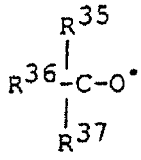 (IIIb) 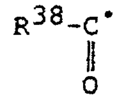 (IIIc)

worin:

- $R^{32}$, $R^{33}$, $R^{34}$, $R^{35}$, $R^{36}$, $R^{37}$, $R^{38}$ jeweils unabhängig bedeuten:
    - gegebenenfalls substituiertes $C_{1-24}$ Alkyl;
    - gegebenenfalls substituiertes $C_{1-24}$ Aryl;

wobei $R^{32}$, $R^{33}$, $R^{34}$, $R^{35}$, $R^{36}$ und $R^{37}$ gleichermaßen jeweils unabhängig ein Wasserstoffatom bezeichnen können.

**18.** Verfahren gemäß Anspruch 17, **dadurch gekennzeichnet, daß** man als Initiator-Reglerverbindung eine Verbindung auswählt, die wenigstens ein monofunktionelles Radikal (Z) bilden kann, daß aus denen der Formel ($IIIa_1$), ($IIIa_2$) oder ($IIIa_3$) ausgewählt ist:

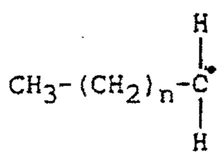 ($IIIa_1$)

mit n=0 oder einer ganzen Zahl von 1 bis 23;

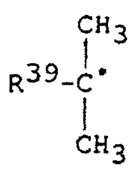 ($IIIa_2$)

wobei $R^{39}$ Wasserstoff, Methyl oder Ethyl bedeutet; und

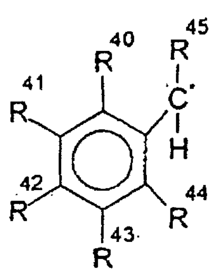 ($IIIa_3$)

worin:

- $R^{40}$, $R^{41}$, $R^{42}$, $R^{43}$ und $R^{44}$ jeweils unabhängig Alkyl, Aryl oder Halogen bedeuten; und
- $R^{45}$ Alkyl oder Aryl bedeutet.

**19.** Verfahren nach einem der Ansprüche 16 bis 18, **dadurch gekennzeichnet, daß** man als Initiator-Reglerverbindung eine Verbindung der Formel (II) auswählt, wie sie in einem der Ansprüche 4 bis 10 definiert ist, worin $-O^{\cdot}$ durch -O-Alkyl oder -O-Styryl ersetzt ist.

**20.** Verfahren gemäß Anspruch 19, **dadurch gekennzeichnet, daß** man als Initiator-Reglerverbindung 1,2-Dihydro-2,2-diphenyl-3-phenylamino-3H-indol-N-oxyhexyl ausgeht.

**21.** Verfahren gemäß einem der Ansprüche 16 bis 19, **dadurch gekennzeichnet, daß** das Verhältnis von Initiator-Reglerverbindung/Monomer(en) in dem Bereich von 0,0001 Gew.-% bis 10 Gew.-% enthalten ist.

**22.** Verfahren gemäß Anspruch 21, **dadurch gekennzeichnet, daß** das Verhältnis Initiator-Reglerverbindung/Monomer(en) in dem Verhältnis von 0,0005 Gew.-% bis 5 Gew.-% enthalten ist.

**23.** Verfahren gemäß Anspruch 16, **dadurch gekennzeichnet, daß** man als Initiatorreglerverbindung eine Verbindung auswählt, die ein Radikal ($Z^{\cdot}$) der Formel (IV) bilden kann:

$$Z^1\text{-}(PM)^1\text{-}[(PM)^2]^{\bullet} \qquad (IV)$$

worin:

- $Z^1$ das Initiatorfragment eines monofunktionellen Initiatorradikals ($Z^{\cdot}$) bedeutet, wie das Radikal ($Z^{\cdot}$), definiert in einem der Ansprüche 17 bis 18 und

- $(PM)^1$ ein Blockpolymer darstellt, das durch lebendige radikalische Polymerisation oder Copolymerisation von wenigstens einem radikalisch polymerisierbaren Monomer in Gegenwart eines Initiators, der freie Radikale ($Z^{1\cdot}$) produziert, und wenigstens einen freien Reglerradikal ($SFR^{\cdot}$), wie in einem der Ansprüche 1 bis 11 definiert, gebildet ist, und

- $(PM)^2$, dessen Gegenwart fakultativ ist, ein anderes, von ($PM^1$) verschiedenes Blockpolymer darstellt, das durch lebendige radikalische Polymerisation oder Copolymerisation von wenigstens einem radikalisch polymerisierbaren Monomer in Gegenwart des Initiators [$Z^1$-$(PM)^{1\cdot}$] und wenigstens einem freien Reglerradikal ($SFR^{\cdot}$) wie in einem der Ansprüche 1 bis 11 definiert, gebildet ist.

**24.** Verfahren gemäß Anspruch 23, **dadurch gekennzeichnet, daß** die Blöcke $(PM)^1$ und $(PM)^2$ die Formel besitzen:

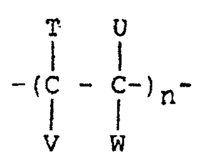

worin:

- T und U jeweils unabhängig Wasserstoff oder einen substituierten oder nicht substituierten $C_{1\text{-}10}$ Alkylrest darstellen;

- V und W jeweils unabhängig Wasserstoff, substituiertes oder nicht substituiertes Alkyl, substituiertes oder nicht substituiertes Aryl, -COOH, $-COOR^{46}$, -CN, $-CONH_2$, $-CONHR^{47}$, $-CONR^{48}R^{49}$,

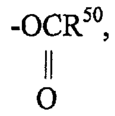

$-OR^{51}$ darstellen, worin $R^{46}$ bis $R^{51}$ jeweils unabhängig substituiertes oder nicht substituiertes Alkyl darstellen oder substituiertes oder nicht substituiertes Aryl; und

n den Polymerisationgrad bezeichnet und insbesondere bis 10000 geht.

**25.** Verfahren gemäß einem der Ansprüche 1 bis 24, **dadurch gekennzeichnet, daß** es unter einem Druck von 100 bis 300 MPa durchgeführt wird.

**26.** Verfahren gemäß Anspruch 25, **dadurch gekennzeichnet, daß** es unter einem Druck von 150 bis 250 MPa durchgeführt wird.

**27.** Verfahren gemäß einem der Ansprüche 1 bis 26, **dadurch gekennzeichnet, daß** es bei einer Temperatur von 100 bis 300°C durchgeführt wird.

**28.** Verfahren gemäß Anspruch 27, **dadurch gekennzeichnet, daß** es bei einer Temperatur von 120 bis 250°C durchgeführt wird.

**29.** Verfahren gemäß einem der Ansprüche 1 bis 27 zur Polymerisation von Ethylen, **dadurch gekennzeichnet, daß** es bei einer Temperatur, einem Druck und einer Dauer gehalten wird, die ausreichen, damit das erhaltene Polyethylen eine zahlengemittelte Molmasse größer als 70000 als Polyethylenäquivalent aufweist und eine zahlengemittelte Molmasse größer als 20000 als Polyethylenäquivalent.

**30.** Verfahren gemäß einem der Ansprüche 1 bis 29, **dadurch gekennzeichnet, daß** es in Gegenwart eines Lösungsmittels durchgeführt wird.

**31.** Verfahren gemäß Anspruch 30, **dadurch gekennzeichnet, daß** das Lösungsmittel aus Benzol, Toluol, Xylol, Heptan, Ethylacetat, Methanol, Ethanol, Propanol, Isopropanol, Butanol, Isobutanol, Amylalkohol, Dimethylsulfoxid, Glycol, Dimethylformamid, Tetrahydrofuran und deren Mischungen ausgewählt ist.

**32.** Verfahren gemäß einem der Ansprüche 30 und 31, **dadurch gekennzeichnet, daß** das Gewichtsverhältnis Lösungsmittel/Inhaltsstoffe der Polymerisation größer als 5 ist.

**33.** Verfahren gemäß einem der Ansprüche 1 bis 32, **dadurch gekennzeichnet, daß** es in Gegenwart eines Transferagenzes durchgeführt wird.

**34.** Verfahren gemäß einem der Ansprüche 1 bis 33, **dadurch gekennzeichnet, daß** es aus einer Copolymerisation von Ethylen mit wenigstens einem Comonomer besteht, das ausgewählt ist aus den Vinylmonomeren, Allylmonomeren, Vinylidenmonomeren, Dienmonomeren und Olefinmonomeren.

**35.** Verfahren gemäß einem der Ansprüche 1 bis 34, **dadurch gekennzeichnet, daß** es in einem Röhrenreaktor oder einem Autoklaven oder einer Kombination von beiden durchgeführt wird.

**36.** Statistisches Homopolymer oder Copolymer von Ethylen, das an einem seiner Enden das Fragment Z trägt, welches aus einem Initiatorradikal (Z) stammt, und an seinem anderen Ende, oder entlang der Kette in Folge der Transferreaktion ein Fragment SFR, das von einem Radikal SFR stammt, wie es in einem der Ansprüche 1 bis 11 definiert ist.

**37.** Blockkopolymer, für welches wenigstens einer der Blöcke Ethylen als Bestandteil umfaßt, wobei das genannte Blockcopolymere wiedergegeben wird durch die Formel:

$$Z\text{-}(PM)^1\text{-}(PM)^2\text{-}(PM)^3\text{-}SFR$$

worin:

- Z das aus einem Initiatorradikal stammende Initiatorfragment bezeichnet;
- $(PM)^1$, $(PM)^2$ und $(PM)^3$ drei unterschiedliche Blockpolymere darstellen, die durch Polymerisation von wenigstens einem durch radikalische Polymerisation polymerisierbarem Monomer gebildet sind, wobei $(PM)^2$ fakultativ ist;
- SFR das aus dem Reglerradikal ($SFR^\cdot$), wie in einem der Ansprüche 1 bis 11 definiert, stammende Reglerfragment bezeichnet, wobei das genannte Fragment SFR sei es am Ende der Kette des Copolymers, sei es entlang der Kette des Blockpolymers $(PM)^3$, welches es trägt, angeordnet sein kann.

**38.** Polymerzusammensetzungen, die eine Mischung von wenigstens einem Homopolymer oder statistischen Copolymer von Ethylen, wie in Anspruch 36 definiert, umfaßt und/oder wenigstens ein Blockcopolymer, wie in Anspruch 37 definiert, und/oder wenigstens ein (Co)Polymer von Ethylen, hergestellt gemäß einem üblichen Verfahren, wobei diese Zusammensetzungen wenigstens ein gewöhnliches Additiv umfassen können.

## Claims

**1.** Process for the radical polymerization or copolymerization of ethylene under high pressure and in the presence of at least one initiating free radical ($Z^\bullet$) and of at least one controlling stable free radical ($SFR^\bullet$) which comprises the indoline nitroxide backbone represented by the formula (I):

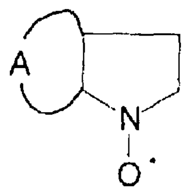

(I)

in which A is a hydrocarbonaceous chain forming an aromatic ring with the two carbon atoms to which it is attached, this ring being able to carry substituents or being able to carry one or more rings placed side by side, which rings are aromatic or aliphatic and optionally substituted, the carbon atoms forming the nitrogenous ring and in the alpha- and beta-position with respect to the nitrogen atom being able to carry hydrogen atoms or substituents.

**2.** Process according to Claim 1, **characterized in that** the controlling stable free radical or radicals ($SFR^\bullet$) are chosen from those which exhibit a decomposition of less than 90% after 6 hours at 200°C in diphenyl ether.

**3.** Process according to Claim 2, **characterized in that** the controlling stable free radical or radicals ($SFR^\bullet$) are chosen from those which exhibit a decomposition of less than 95% after 6 hours at 200°C in diphenyl ether.

**4.** Process according to one of Claims 1 to 3, **characterized in that** the controlling stable free radical or radicals ($SFR^\bullet$) are chosen from those represented by the formula (II):

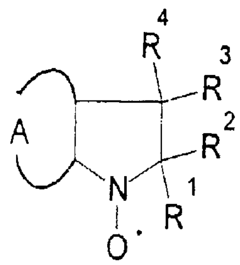

(II)

in which:

- $R^1$, $R^2$, $R^3$ and $R^4$, which can be identical or different, each independently represent hydrogen; alkyl; alkenyl; aryl; aralkyl; OH; $-OR^5$ with $R^5$ representing an alkyl, alkenyl, aryl or aralkyl residue; -COOH; $-COOR^6$ with $R^6$ representing an alkyl, alkenyl, aryl or aralkyl residue; or CN; it being possible for $R^3$ and $R^4$ to merge together into =X, X representing O or $=NR^7$ with $R^7$ representing an alkyl, alkenyl, aryl or aralkyl residue; and it being possible for the alkyl, alkenyl, aryl or aralkyl residues coming within the definition of $R^1$ to $R^6$ to carry substituents; and
- A is as defined in Claim 1.

**5.** Process according to Claim 4, **characterized in that** at least one of the radicals $R^1$ and $R^2$ has a molar mass of greater than 15.

**6.** Process according to Claims 4 and 5, **characterized in that** $R^3$ and $R^4$ merge together into =X, X being as defined in Claim 4.

**7.** Process according to one of Claims 4 to 6, **characterized in that**:

- $R^1$ represents an aryl residue; and
- $R^2$ represents a $C_1$-$C_4$ alkyl residue; an aryl residue; a benzyl residue; or an allyl residue.

**8.** Process according to one of Claims 4 to 7, **characterized in that** the choice is made, as compounds of formula (II), of those represented by the formula (IIa):

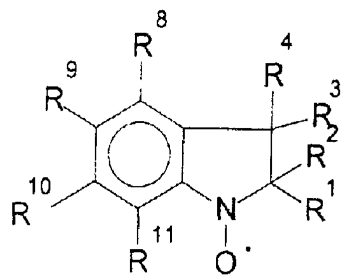

(IIa)

in which:

- $R^1$, $R^2$, $R^3$ and $R^4$ are as defined in Claim 4; and
- $R^8$ to $R^{11}$, which are identical or different, each independently represent hydrogen or a radical as indicated for $R^1$ to $R^4$ in Claim 4; it being possible for $R^8$ and $R^9$ or $R^9$ and $R^{10}$ or $R^{10}$ and $R^{11}$ to be connected to one another to form an aliphatic or aromatic ring.

**9.** Process according to Claim 8, **characterized in that** $R^8$ to $R^{11}$ each represent a hydrogen, it furthermore being possible for at least one of them to be substituted by methyl.

**10.** Process according to Claim 9, **characterized in that** the controlling stable free radical ($SFR^{\bullet}$) is 1,2-dihydro-2,2-diphenyl-3-phenylimino-3H-indole N-oxyl.

**11.** Process according to Claim 8, **characterized in that** the controlling stable free radicals ($SFR^{\bullet}$) of formula (IIa) in which $R^8$ and $R^9$ or $R^9$ and $R^{10}$ or $R^{10}$ and $R^{11}$ are connected to one another to form an aliphatic or aromatic ring are chosen from those of the formulae ($IIa_1$) to ($IIa_4$):

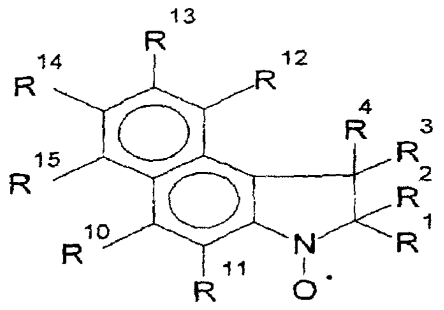

(IIa1)

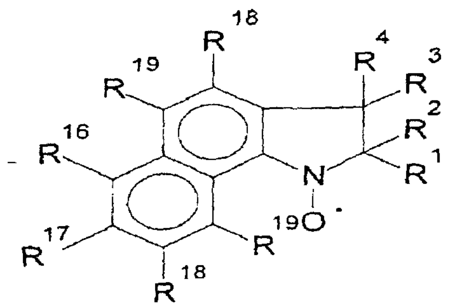

(IIa2)

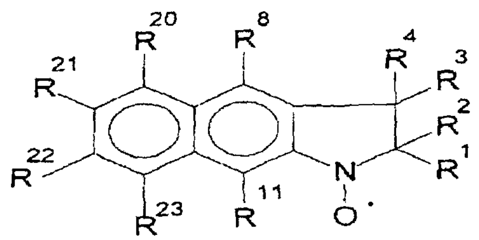

(IIa3)

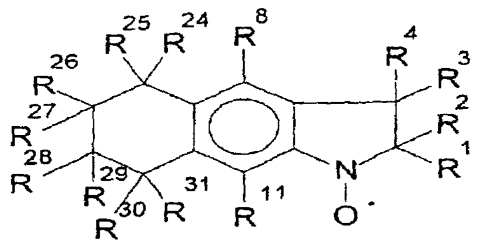

(IIa4)

in which:

- $R^1$, $R^2$, $R^3$ and $R^4$ are as defined in Claim 4; and
- $R^8$ and $R^{10}$ to $R^{31}$ each independently represent hydrogen or a radical as indicated for $R^1$ to $R^4$ in Claim 4.

**12.** Process according to one of Claims 1 to 11, **characterized in that** the initiating free radical or radicals ($Z^•$) result from a compound chosen from diacyl peroxides, peroxyesters, dialkyl peroxides, dicumyl peroxide, cumyl tert-butyl peroxide, peroxyketals, hydroperoxides and peroxydicarbonates.

**13.** Process according to Claim 12, **characterized in that** the ratio of the compound or compounds providing the

initiating free radicals ($Z^\bullet$)/monomer(s) is within the range from 0.0005% to 20% by weight, preferably from 0.0005% to 10% by weight and in a preferred way from 0.0005% to 5% by weight.

**14.** Process according to one of Claims 1 to 13, **characterized in that** the ratio of the controlling stable free radical or radicals ($SFR^\bullet$)/monomer(s) is within the range from 0.0005% to 15% by weight, preferably from 0.0005% to 5% by weight.

**15.** Process according to one of Claims 1 to 14, **characterized in that** the molar ratio of the controlling stable free radical or radicals ($SFR^\bullet$) of formula (I)/compound(s) providing the initiating free radicals is within the range from 0.1 to 5, preferably from 0.8 to 1.2.

**16.** Process according to one of Claims 1 to 11, **characterized in that** the initiating free radical or radicals result from at least one polymerization initiating-controlling compound capable of providing, by decomposition under the polymerization or copolymerization conditions:

- a monofunctional initiating free radical ($Z^\bullet$); and
- a stable free radical ($SFR^\bullet$) as defined in one of Claims 1 to 10, which is stable under the (co)polymerization conditions.

**17.** Process according to Claim 16, **characterized in that** the choice is made, as initiating-controlling compound, of a compound capable of providing a monofunctional radical ($Z^\bullet$) chosen from those of the formulae (IIIa), (IIIb) or (IIIc):

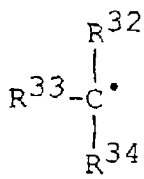 (IIIa) 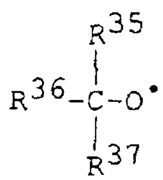 (IIIb) , 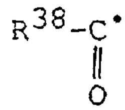 (IIIc)

in which:

- $R^{32}$, $R^{33}$, $R^{34}$, $R^{35}$, $R^{36}$, $R^{37}$ and $R^{38}$ each independently represent:
  - optionally substituted $C_{1-24}$ alkyl;
  - optionally substituted $C_{1-24}$ aryl;

  it also being possible for $R^{32}$, $R^{33}$, $R^{34}$, $R^{35}$, $R^{36}$ and $R^{37}$ each independently to denote a hydrogen atom.

**18.** Process according to Claim 17, **characterized in that** the choice is made, as initiating-controlling compound, of a compound capable of providing at least one monofunctional radical ($Z^\bullet$) chosen from those of the formulae ($IIIa_1$), ($IIIa_2$) or ($IIIa_3$) :

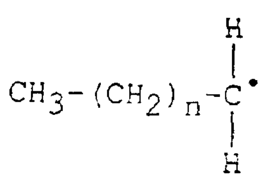 ($IIIa_1$)

where n = 0 or an integer from 1 to 23;

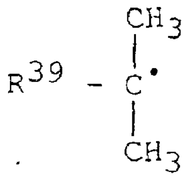

(IIIa2)

with $R^{39}$ representing hydrogen, methyl or ethyl; and

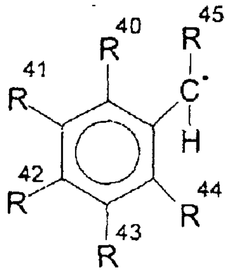

(IIIa3)

with:

- $R^{40}$, $R^{41}$, $R^{42}$, $R^{43}$ and $R^{44}$ each independently representing alkyl, aryl or halogen; and
- $R^{45}$ representing alkyl or aryl.

**19.** Process according to one of Claims 16 to 18, **characterized in that** the choice is made, as initiator-controller, of a compound of the formula (II) as defined in one of Claims 4 to 10 in which -O$^{\bullet}$ is replaced by -O-alkyl or -O-styryl.

**20.** Process according to Claim 19, **characterized in that** the choice is made, as initiator-controller, of 1,2-dihydro-2,2-diphenyl-3-phenylimino-3H-indole N-oxyhexyl.

**21.** Process according to one of Claims 16 to 19, **characterized in that** the ratio of the initiating-controlling compound/monomer(s) is within the range from 0.0001% to 10% by weight.

**22.** Process according to Claim 21, **characterized in that** the ratio of the initiating-controlling compound/monomer(s) is within the range from 0.0005% to 5% by weight.

**23.** Process according to Claim 16, **characterized in that** the choice is made, as initiating-controlling compound, of a compound capable of providing a radical ($Z^{\bullet}$) of formula (IV) :

$$Z^1\text{-}(PM)^1\text{-}[(PM)^2]^{\bullet} \qquad \text{(IV)}$$

in which:

- $Z^1$ represents the initiating fragment of a monofunctional radical initiator ($Z^{1\bullet}$), such as the radical ($Z^{\bullet}$) defined in either of Claims 17 and 18; and
- $(PM)^1$ represents a polymer block formed by living radical polymerization or copolymerization of at least one monomer which can polymerize by the radical route in the presence of an initiator which produces free radicals ($Z^{1\bullet}$) and of at least one controlling free radical (SFR$^{\bullet}$) as defined in one of Claims 1 to 11; and
- $(PM)^2$, the presence of which is optional, represents another polymer block, other than $(PM)^1$, formed by living radical polymerization or copolymerization of at least one monomer which can polymerize by the radical route in the presence of the initiator [$Z^1$-$(PM)^{1\bullet}$] and of at least one controlling free radical (SFR$^{\bullet}$) as defined in one of Claims 1 to 11.

**24.** Process according to Claim 23, **characterized in that** the $(PM)^1$ and $(PM)^2$ blocks have the formula:

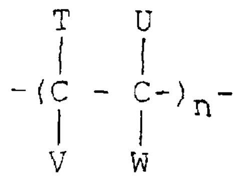

where:

- T and U each independently represent hydrogen or a substituted or unsubstituted $C_{1-10}$ alkyl residue;
- V and W each independently represent hydrogen, substituted or unsubstituted alkyl, substituted or unsubstituted aryl, -COOH, $-COOR^{46}$, -CN, $-CONH_2$, $-CONHR^{47}$, $-CONR^{48}R^{49}$,

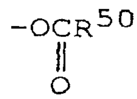

  or $-OR^{51}$, $R^{46}$ to $R^{51}$ each independently representing substituted or unsubstituted alkyl or substituted or unsubstituted aryl; and
- n denotes the degree of polymerization, which can in particular range up to 10 000.

**25.** Process according to one of Claims 1 to 24, **characterized in that** it is carried out under a pressure of 100 to 300 MPa.

**26.** Process according to Claim 25, **characterized in that** it is carried out under a pressure of 150 to 250 MPa.

**27.** Process according to one of Claims 1 to 26, **characterized in that** it is carried out at a temperature of 100 to 300°C.

**28.** Process according to Claim 27, **characterized in that** it is carried out at a temperature of 120 to 250°C.

**29.** Process according to one of Claims 1 to 27 for the polymerization of ethylene, **characterized in that** it is carried out at a temperature, a pressure and a duration which are sufficient for the polyethylene obtained to have a weight-average molecular mass greater than 70 000 as polyethylene equivalent and a number-average molecular mass greater than 20 000 as polyethylene equivalent.

**30.** Process according to one of Claims 1 to 29, **characterized in that** it is carried out in the presence of a solvent.

**31.** Process according to Claim 30, **characterized in that** the solvent is chosen from benzene, toluene, xylene, heptane, ethyl acetate, methanol, ethanol, propanol, isopropanol, butanol, isobutanol, amyl alcohol, dimethyl sulphoxide, glycol, dimethylformamide, tetrahydrofuran and their mixtures.

**32.** Process according to either of Claims 30 and 31, **characterized in that** the solvent/polymerization ingredients ratio by weight is at most 5.

**33.** Process according to one of Claims 1 to 32, **characterized in that** it is carried out in the presence of a transfer agent.

**34.** Process according to one of Claims 1 to 33, **characterized in that** it consists of a copolymerization of ethylene with at least one comonomer chosen from vinyl, allyl, vinylidene, diene and olefinic monomers.

**35.** Process according to one of Claims 1 to 34, **characterized in that** it is carried out in a tubular reactor or autoclave or a combination of the two.

**36.** Homopolymer or random copolymer of ethylene carrying, at one of its ends, the Z fragment resulting from an initiating radical ($Z^\bullet$) and, at its other end or along the chain following a transfer reaction, an SFR fragment resulting from a radical ($SFR^\bullet$), as defined in one of Claims 1 to 11.

**37.** Block copolymer for which at least one of the blocks comprises ethylene as constituent, it being possible for the said block copolymer to be represented by the formula:

$$Z\text{-}(PM)^1\text{-}(PM)^2\text{-}(PM)^3\text{-}SFR$$

in which:

- Z denotes the initiating fragment resulting from a radical initiator;
- $(PM)^1$, $(PM)^2$ and $(PM)^3$ represent three different polymer blocks formed by polymerization of at least one monomer which can polymerize by the radical route, $(PM)^2$ being optional;
- SFR denotes the controlling fragment resulting from the controlling radical ($SFR^\bullet$) as defined in one of Claims 1 to 11, it being possible for the said SFR fragment to be situated either at the end of the chain of the copolymer or along the chain of the polymer block $(PM)^3$ which carries it.

**38.** Polymer compositions comprising a mixture of at least one homopolymer or random copolymer of ethylene as defined in Claim 36 and/or of at least one block copolymer as defined in Claim 37 and/or of at least one ethylene (co)polymer prepared by a conventional process, it being possible for these compositions to comprise at least one conventional additive.